# EUROPEAN PATENT APPLICATION

(11) **EP 4 708 968 A1**
(43) Date of publication of application: **11.03.2026**
(21) Application number: 23944680.0
(22) Date of filing: 12.07.2023
(51) Int. Cl.: H04W 40/22

(54) **WIRELESS RESOURCE MANAGEMENT METHOD AND APPARATUS, TERMINAL, CHIP AND STORAGE MEDIUM**

(71) Applicant: GUANGDONG OPPO MOBILE TELECOMMUNICATIONS CORP., LTD., Dongguan, Guangdong 523860 (CN)
(72) Inventor: LENG, Bingxue, Dongguan, Guangdong 523860 (CN); LU, Qianxi, Dongguan, Guangdong 523860 (CN)
(74) Representative: Penza, Giancarlo
(86) International application number: PCT/CN2023/107028
(87) International publication number: WO 2025/010660

(57) **Abstract**

Provided in the embodiments of the present application is a wireless resource management method, which is applied to a first device, and a communication link where the first device is located comprising a source terminal device, a target device, and a plurality of relay terminal devices between the source terminal device and the target device. The method comprises: by means of a radio resource control (RRC) connection, sending first information to a second device in the communication link, the first information being related to radio resource management. The method designs a control plane process in multi-hop relay scenarios, and implements wireless resource management in the multi-hop relay scenarios.

## Description

### TECHNICAL FIELD

Embodiments of the present application relate to the technical field of communication, and particularly relate to a radio resource management method, apparatus, terminal, chip, and storage medium.

### BACKGROUND

Currently, research on terminal-to-terminal (UE to UE, U2U) or terminal-to-network (UE to Network, U2N) relay is mainly directed to single-hop scenario, i.e. there is only one relay terminal between a source terminal and a target terminal (or base station). In the future, it is very likely that multi-hop relay will be introduced to further enhance coverage, that is, there may be multiple relay terminals between the source terminal and the target terminal (or base station).

However, at present, there is no solution to disclose how to implement a Radio Resource Management (RRM) procedure in a scenario in which there are multiple relay terminals between a source terminal and a target terminal (or base station).

### SUMMARY

Embodiments of the present application provide a radio resource management method, apparatus, terminal, chip, and storage medium.

According to a first aspect, an embodiment of the present application provides a radio resource management method, which is applied to a first device, and communication links in which the first device is located includes a source terminal device, a target device, and a plurality of relay terminal devices between the source terminal device and the target device, and the method includes: transmitting first information to second device(s) in the communication links through radio resource control RRC connection, the first information being related to radio resource management.

In a second aspect, an embodiment of the present application provides a radio resource management apparatus. Communication links in which the apparatus is located includes a source terminal device, a target device, and a plurality of relay terminal devices between the source terminal device and the target device. The apparatus includes a first transmitting unit configured to transmit first information to second device(s) in the communication links through radio resource control RRC connection, and the first information is related to radio resource management.

In a third aspect, an embodiment of the present application provides a terminal including a processor and a memory. The memory is used for storing a computer program, and the processor is used for invoking and executing the computer program stored in the memory to perform the radio resource management method described above.

In a fourth aspect, an embodiment of the present application provides a chip for implementing the radio resource management method described above. Specifically, the chip includes a processor for invoking and running a computer program from a memory to cause a device on which the chip is mounted to perform the radio resource management method described above.

In a fifth aspect, an embodiment of the present application provides a computer-readable storage medium for storing a computer program that causes a computer to execute the radio resource management method described above.

In a sixth aspect, an embodiment of the present application provides a computer program product including computer program instructions that cause a computer to perform the radio resource management method described above.

In a seventh aspect, an embodiment of the present application provides a computer program that, when run on a computer, causes the computer to perform the radio resource management method described above.

According to the above technical solution, the radio resource management process in the multi-hop relay scenario is realized, or the control plane flow in the multi-hop relay scenario is realized.

### BRIEF DESCRIPTION OF THE DRAWINGS

The accompanying drawings described herein are intended to provide a further understanding of the present application, constitute a part of the present application, and the schematic embodiments of the present application and the description thereof are intended to explain the present application, and do not constitute an undue limitation of the present application. In the drawings:

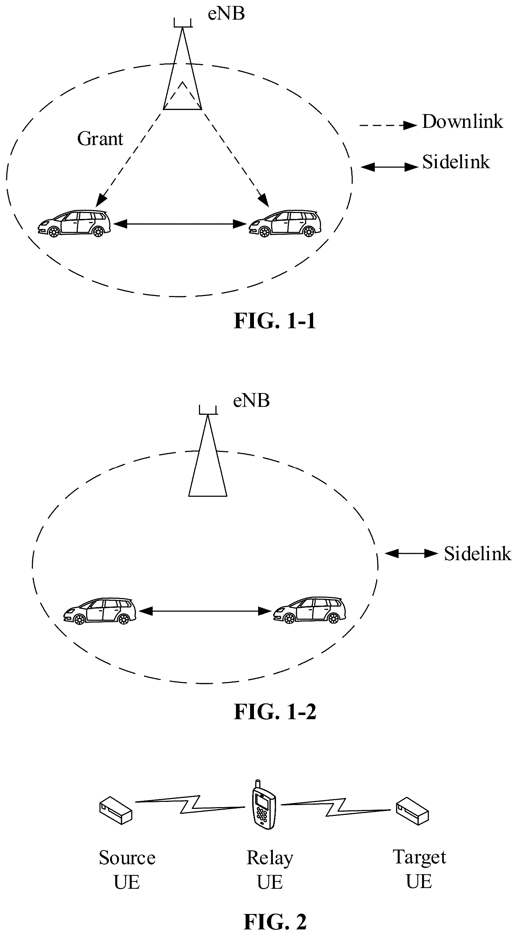

FIG. 1-1 is a schematic diagram of resource selection corresponding to a first mode according to an embodiment of the present application.
FIGS. 1-2 are schematic diagrams of resource selection corresponding to a second mode provided by an embodiment of the present application;
FIG. 2 is a schematic diagram illustrating an example of a relay UE transferring data between a source UE and a target UE according to an embodiment of the present application.
FIG. 3 is a flow diagram of link establishment between a source UE and a target UE according to an embodiment of the present application.
FIG. 4 is a schematic diagram of an example of a U2U relay user plane protocol stack provided by an embodiment of the present application;
FIG. 5 is a schematic flow diagram of a radio resource management method according to an embodiment of the present application.
FIG. 6 is a first schematic diagram of a network connection mode in a multi-hop scenario according to an embodiment of the present application.
FIG. 7 is a second schematic diagram of a network connection mode in a multi-hop scenario according to an embodiment of the present application.
FIG. 8 is a third schematic diagram of a network connection mode in a multi-hop scenario according to an embodiment of the present application.
FIG. 9 is a fourth schematic diagram of a network connection mode in a multi-hop scenario according to an embodiment of the present application.
FIG. 10 is a schematic diagram of a structural composition of a radio resource management apparatus according to an embodiment of the present application;
FIG. 11 is a schematic structural diagram of a communication device according to an embodiment of the present application.
FIG. 12 is a schematic structural diagram of a chip according to an embodiment of the present application.

### DETAILED DESCRIPTION

Hereinafter, the technical solutions in the embodiments of the present application will be described with reference to the drawings in the embodiments of the present application, and it is obvious that the described embodiments are part of the embodiments of the present application, but not all the embodiments. Based on the embodiments in the present application, all other embodiments obtained by those skilled in the art without creative work fall within the scope of protection of the present application.

The technical solutions of the embodiments of the present application can be applied to various sidelink communication systems. In order to facilitate understanding of the technical solutions of the embodiments of the present application, the related technologies of the embodiments of the present application will be described below, and the related technologies below can be arbitrarily combined with the technical solutions of the embodiments of the present application as options, and all of them fall within the scope of protection of the embodiments of the present application.

### 1. Device to Device (D2D)/Vehicle to Everything (V2X) in Long Term Evolution (LTE)

Device-to-device communication is a Sidelink (SL) transmission technique based on D2D. Different from the traditional cellular system in which communication data is received or sent through the base station, the V2X system uses direct communication of terminal-to-terminal, so it has higher spectral efficiency and lower transmission delay. Two transmission modes are defined in the 3rd Generation Partnership Project (3GPP): a first mode (mode 3) and a second mode (mode 4).

First mode: the transmission resources of the terminal are allocated by a base station (eNB), and the terminal transmits data on the sidelink according to the resources allocated by the base station. The base station may allocate a resource for a single transmission to the terminal, or may allocate resources for a semi-static transmission to the terminal. As shown in Figure 1-1, the transmission resources of the terminal are allocated by the base station, the base station allocates resources to the terminal through the downlink based on grant signaling (Grant), and the terminal transmits data on the sidelink according to the resources allocated by the base station.

Second mode: The terminal selects a resource in the resource pool to transmit data. As shown in Figure 1-2, the terminal selects a resource in the resource pool for data transmission.

In 3GPP, D2D is studied in different phases as follows.
1) Proximity-based Service (ProSe): In Rel-12/13, device-to-device communication was studied for ProSe scenarios, which are mainly aimed at public safety services.
   In ProSe, by configuring the position of the resource pool in the time domain, for example, the resource pool is discontinuous in the time domain, the UE can discontinuously transmit/receive data on the sidelink, thereby achieving the effect of power saving.
2) V2X: In Rel-14/15, the V2X system studied vehicle-to-vehicle communication scenarios, which are mainly oriented to high-speed moving vehicle-to-vehicle and vehicle-person communication services.
   In V2X, since the vehicle mounted system has continuous power supply, power efficiency is not a major problem. Instead, the time delay of data transmission is a major problem. Therefore, the terminal device is required to perform continuous transmission and reception in system design.
3) Wearable devices (FeD2D): In Rel-14, this scenario studies the scenario in which wearable devices access the network through mobile phones, which is mainly aimed at scenarios with low moving speed and low power access.
   In FeD2D, in the pre-research stage, 3GPP concluded that the base station can configure the Discontinuous Reception (DRX) parameter of the remote terminal through one relay terminal, but did not give a conclusion on the specific details of how to configure the DRX.

### 2. New Radio (NR) V2X

On the basis of LTE V2X, NR V2X is not limited to the broadcast scenario, but further extends to the unicast and multicast scenarios, and the application of V2X is studied in these scenarios.

Similar to LTE V2X, NR V2X also defines two resource grant modes, mode-1/2 (i.e., the first mode and the second mode described above). Different from LTE V2X, in addition to feedback-free and UE-initiated HARQ retransmission, NR V2X introduces feedback-based HARQ retransmission, which is not limited to unicast communication, but also includes multicast communication.

### 3. Sidelink U2U Relay Technology

In Rel-17 ProSe, 3GPP studies the U2U relay capability of layer 2 and layer 3 based relay, that is, the source UE is connected to the target UE through the relay UE, and the relay UE transfers data between the source UE and the target UE, as shown in FIG. 2.

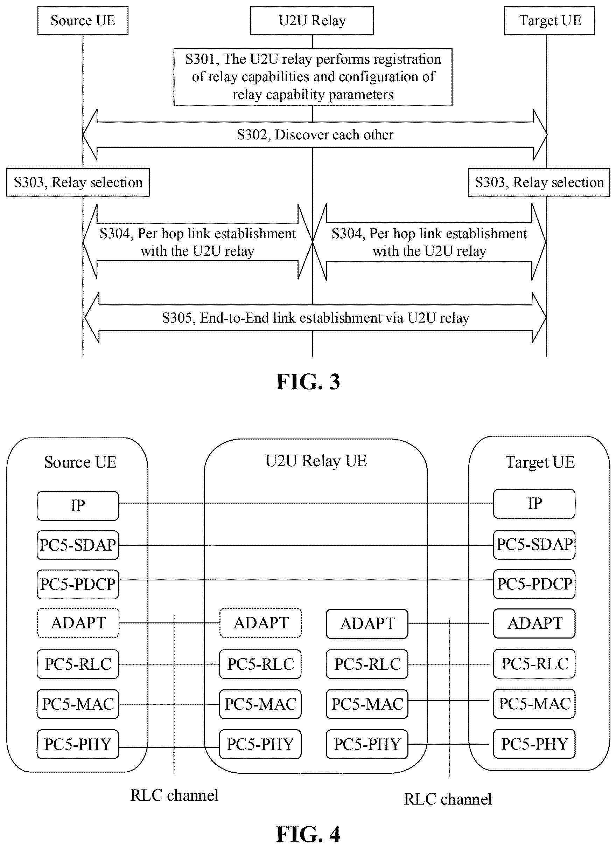

As an example, link establishment steps between the source UE and the target UE are shown in FIG. 3. Among them, the source UE, the relay UE, and the target UE discover each other through a discovery message or a direct communication request (DCR) message, and the relay UE can help the source UE forward the discovery message or the DCR message. After the source UE and the target UE discover each other, they can perform relay selection to select an appropriate relay to establish a link with it, respectively. Then the relay establishes an end-to-end PC5 link. Here, establishing a PC5 link can also be understood as establishing a link through a direct communication interface.

As shown in FIG. 3, the link establishment steps between the source UE and the target UE may include the following steps.

S301: The U2U relay performs registration of relay capabilities and configuration of relay capability parameters.

For example, the U2U relay may register with the core network as a relay UE having relay capabilities and configure parameters related to the relay capabilities.

S302, the source UE and the target UE discover each other.

S303: the source UE and the target UE perform relay selection.

S304, the source UE and the target UE establish a per hop link with the U2U relay, respectively.

S305, the source UE and the target UE establish an End-to-End link via the U2U relay. 4. U2U Relay User Plane Protocol Stack

FIG. 4 is a schematic diagram of an example of a U2U relay user plane protocol stack. 3GPP Rel-17 introduces layer 2 U2U relay. As shown in FIG. 4, the adaptation layer (ADAPT) is placed on the control plane and user plane Radio Link Control (RLC) sublayers between the relay UE and the source/target UE. The PC5 Service Data Adaptation Protocol (SDAP)/Packet Data Convergence Protocol (PDCP) and Radio Resource Control (RRC) terminate between the source UE and the target UE, while RLC, Media Access Control (MAC) and Physical Layer (PHY) terminate in each link (i.e., the link between the source UE and the relay UE and the link between the relay UE and the target UE). Whether the adaptation layer is also supported at the PC5 interface between the source UE and the relay UE has not yet been concluded.

For the L2 U2U relay, on the one hand, sidelink bearer mapping between PC5 RLC channels is supported to be accessed for the adaptation layer of the relay UE. For the sidelink relay service, N: 1 mapping and data multiplexing can be performed for different end-to-end bearers (such as Signalling Radio Bearer (SRB) or Data Radio Bearer (DRB)) of the same remote UE and/or different remote UEs on one PC5 RLC channel.

On the other hand, the adaptation layer is used for UE identifier supporting sidelink service (multiplexing data from multiple UEs). The UE PC5 radio bearer and the identification information of the UE are included in the adaptation layer so that the target UE associates the received data packet of a specific PDCP entity associated with the radio bearer of the source UE.

### 5. U2N relay

The remote UE performs measurement reporting, and includes information such as a relay UE identifier, a serving cell identifier, and a Reference Signal Receiving Power (RSRP) measurement in the measurement reporting information. When the remote UE performs link switching from the indirect path to the direct path, it is more recommended for the serving relay UE to use SL-RSRP to perform measurement on the sidelink. When the remote UE performs link switching from direct path to indirect path, measurements on the sidelink are performed using SD-RSRP. In addition, when measurement reporting is performed, two new measurement reporting trigger events are defined for the U2N relay handover. Event 1: when the link quality of the serving relay UE is lower than the configured threshold value, and (optionally) the link quality of the neighboring cell is higher than the configured threshold value, the remote UE performs measurement reporting. Event 2: when the link quality of the serving cell is lower than the configured threshold value, and optionally when the link quality of the relay UE is higher than the configured threshold value, the remote UE may select to perform measurement reporting. In addition, in order to assist the remote UE in performing switching from direct link to indirect link, a new timer is introduced. When the remote UE receives an RRC reconfiguration message indicating switching from direct link to indirect link, the remote UE starts the timer. When the timer expires, the remote UE performs RRC re-establishment.

The related technologies/terms related to the embodiments of the present application have been briefly described above, and will not be repeated in the following embodiments.

It is to be understood that the terms "system" and "network" are often used interchangeably herein. Herein, the term "and/or" is only an association relationship describing an association object, and means that there may be three relationships, for example, A and/or B may represent the following 3 cases: A alone exists, A and B exist simultaneously, and B alone exists. In addition, the character "/" in this article generally indicates that the related objects before and after are in an "or" relationship. It should also be understood that the "indication" mentioned in the embodiments of the present application may be a direct indication, an indirect indication, or an associated relationship. For example, A indicates B, which may mean that A directly indicates B, for example, B can be acquired by A. Or, it may mean that A indicates B indirectly, for example, A indicates C, and B can be obtained through C. Or, it may mean that there is an association relationship between A and B. It should also be understood that "correspondence" mentioned in the embodiments of the present application may indicate that there is a direct correspondence or indirect correspondence between the two, may indicate that there is a correlation relationship between the two, or may indicate a relationship between indicating and being indicated, configuring and being configured, or the like. It should also be understood that the "predefined" or "predefined rules" mentioned in the embodiments of the present application can be realized by storing corresponding codes, tables, or other ways that can be used to indicate relevant information in advance in devices (e.g., including terminal devices and network devices), and the present application does not limit specific implementations thereof.

It should also be understood that the embodiments of the present application do not limit specific forms of the terminal device and the network device.

The terminal device in the embodiment of the present application may refer to an access terminal, a User Equipment (UE), a user unit, a user station, a mobile station, a mobile stage, a remote station, a remote terminal, a mobile device, a user terminal, a terminal, a wireless communication device, a user agent, or a user device. The access terminal may be a cellular telephone, a cordless telephone, a Session Initiation Protocol (SIP) telephone, an IoT device, a satellite handheld terminal, a Wireless Local Loop (WLL) station, a Personal Digital Assistant (PDA), a handheld device with wireless communication functionality, a computing device or other processing device connected to a wireless modem, a vehicle-mounted device, a wearable device, a terminal device in a 5G network or a terminal device in a future evolution network, or the like.

The network device in the embodiment of the present application may be an Evolutionary Node B (eNB) or eNodeB in an LTE system, a Next Generation Radio Access Network (NG RAN) device, a base station (gNB) in an NR system, or a radio controller in a Cloud Radio Access Network (CRAN), or the network device 120 may be a relay station, an access point, a vehicle-mounted device, a wearable device, a hub, a switch, a bridge, a router, or a network device in a future evolved Public Land Mobile Network (PLMN).

Currently, studies on U2U/U2N relays are mainly directed to single-hop scenarios, i.e., there is only one relay terminal between a source terminal and a target terminal (or base station). In the future, it is very likely that multi-hop relay will be introduced to further enhance coverage, that is, there may be multiple relay terminals between the source terminal and the target terminal (or base station). After considering multiple relays, there will be an impact on the PC5 RRM process between multi-hop relays. However, at present, there is no solution to disclose how to implement the RRM process, or how to perform the control plane flow, in a scenario in which there are multiple relay terminals between the source terminal and the target terminal (or base station) (that is, in a multi-hop U2U/U2N relay scenario).

In view of this, the present application provides a radio resource management method, apparatus, terminal, chip, and storage medium. The method may be applicable to a multi-hop U2U/U2N relay scenario. In the method, the first device in the communication links may transmit information related to radio resource management to the second device(s) through the RRC connection, thereby implementing a radio resource management procedure in a multi-hop relay scenario, or implementing a control plane flow in a multi-hop relay scenario.

In order to facilitate understanding of the technical solutions of the embodiments of the present application, the technical solutions of the present application will be described in detail below with reference to specific examples. The above related technologies can be arbitrarily combined with the technical solutions of the embodiments of the present application as optional solutions, and all of them fall within the scope of protection of the embodiments of the present application. Embodiments of the present application include at least some of the following.

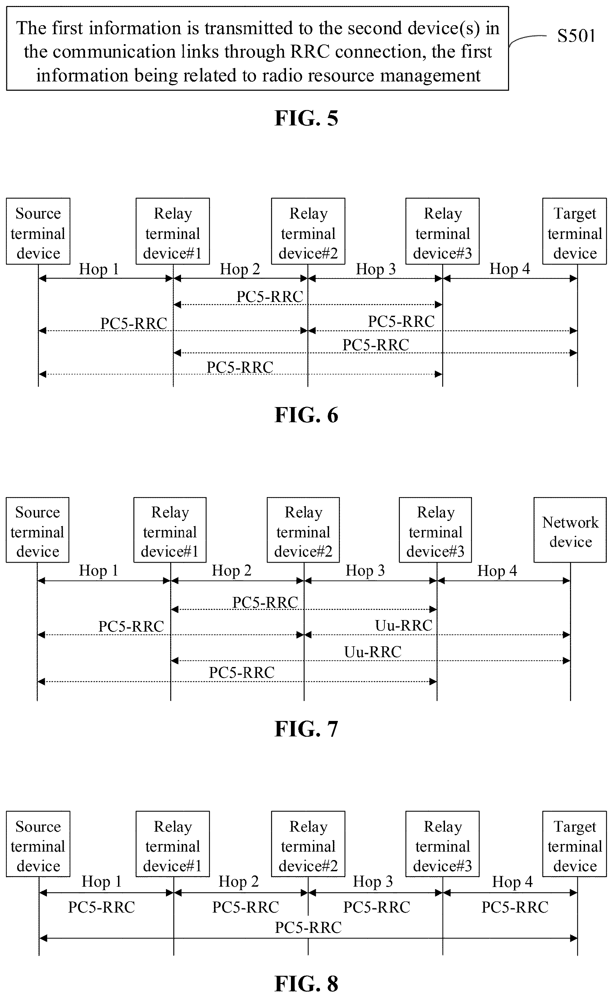

FIG. 5 is a schematic flow diagram of a radio resource management method according to an embodiment of the present application. The method can be applied to a first device, and the communication links in which the first device is located include a source terminal device, a target device, and a plurality of relay terminal devices between the source terminal device and the target device. The target device in the embodiment of the present application may be a network device or a terminal device. Generally, unless otherwise specified, the target device in the embodiment of the present application may be a network device or a terminal device.

As shown in FIG. 5, the radio resource management method may include the following step S501.

In S501, the first information is transmitted to the second device(s) in the communication links through RRC connection, the first information being related to radio resource management.

Here, the first information being related to radio resource management may be understood that the first information is related to control plane information, or may be understood that the first information is control plane information.

Exemplarily, the second device(s) and the first device in the embodiment of the present application may or may not be adjacent to each other in a communication links. The second device(s) and the first device being adjacent to each other in the communication links may be understood that there is no relay terminal device in the communication links between the second device(s) and the first device, or may be understood that the second device(s) is directly connected to the first device. The second device(s) and the first device being not adjacent to each other in the communication links may be understood that there is at least one relay terminal device in the communication links between the second device(s) and the first device, or may be understood that the second device(s) is not directly connected to the first device. It can be understood that when the second device(s) is not adjacent to the first device, the first information is information transmitted across hops.

For convenience of description, hereinafter, a scenario in which the second device(s) and the first device are not adjacent in the communication links is denoted as scenario 1, and a scenario in which the second device(s) and the first device are adjacent in the communication links is denoted as scenario 2. Scenario 1 and Scenario 2 are described below, respectively.

Scenario 1: The second device(s) is not adjacent to the first device in the communication links.

In some embodiments, the first device is a terminal device in the communication links that does not meet the first condition, the second device(s) is terminal device(s) in the communication links that meets the first condition, the target device is a network device, the first information is used for requesting a paging message for the first device, and/or system information required by the first device. The system information may be, for example, a system information block (SIB).

Exemplarily, in a case where the first information is used to request a paging message for the first device, the first information may include information required for monitoring the paging message for the first device. In a case where the first information is used to request system information required by the first device, the first information includes a type of the system information required by the first device. That is, if the first device requests a paging message for the first device from the second device(s), the first device may carry information required for monitoring the paging message in the first information, such as an identifier (ID) of the first device, a monitoring period, and the like. If the first device requests the system information required by the first device from the second device(s), the first device may carry the type of the system information required by the first device in the first information.

Exemplarily, the first condition may include at least one of: being located within signal coverage of the network device, being a device closest to the network device in the communication links, and being able to acquire paging message and/or system information from the network device directly.

As an example, assuming that the first condition is being located within the signal coverage of the network device, the first condition being not met may be understood as being located outside the signal coverage of the network device.

In another example, assuming that the first condition is being the device closest to the network device in the communication links, the first condition being not met may be understood as not being the device closest to the network device in the communication links. The terminal device closest to the network device in the communication links may be, for example, the last hop terminal device in the uplink direction, or a terminal device directly connected to the network device.

In another example, assuming that the first condition is being able to acquire the paging message and/or the system information from the network device directly, the first condition being not met can be understood as being unable to acquire the paging message and/or the system information from the network device directly. The terminal device being able to acquire paging message and/or system information from the network device directly may be, for example, a terminal device directly connected to the network device.

As yet another example, assuming that the first condition comprises a plurality of conditions, then in one possible implementation, the first condition may be considered not met when any one or more of the plurality of conditions are not met. In another possible implementation, the first condition may be considered to be not met when none of the plurality of conditions is met. For example, assuming that the first condition includes: being located within the signal coverage of the network device and being the device closest to the network device in the communication links. In one possible implementation, if a terminal device is located outside the signal coverage of the network device and/or is not the device closest to the network device in the communication links, it may be considered that the terminal device does not met the first condition. In another possible implementation, if a terminal device is located outside the signal coverage of the network device and is not the closest device to the network device in the communication links, it may be considered that the terminal device does not met the first condition.

It should be understood that the above-described examples can be applied to various embodiments of the present application relating to the first condition, and will not be described hereinafter for the sake of brevity.

According to the method of the present embodiment, the first device that does not meet the first condition may transmit the first information to second device(s) that is not adjacent and met the first condition through the RRC connection to request a paging message for the first device and/or system information required by the first device. Since the terminal device meeting the first condition usually has the ability to obtain paging message and/or system information from the network device, the terminal device meeting the first condition may obtain information requested by the first device (such as paging messages for the first device and/or system information required by the first device) from the network device based on the first information, and forward the obtained information to the first device.

In some scenarios, the number of second device(s) may be multiple, i.e., the first device may request paging message for the first device and/or system information required by the first device from the plurality of second devices.

In some embodiments, the first device is a terminal device in the communication links that meets the first condition, the second device(s) is terminal device(s) in the communication links that does not meet the first condition, the target device is a network device, and the first information includes paging message(s) for the second device(s) and/or system information required by the second device(s).

Exemplarily, the first condition may include at least one of: being located within signal coverage of the network device, being a device closest to the network device in the communication links, and being able to acquire paging messages and/or system information from the network device directly.

According to the method of the present embodiment, the first device meeting the first condition may transmit the first information to second device(s) that is not adjacent and does not meet the first condition through the RRC connection to convey paging message(s) for the second device(s) and/or system information required by the second device(s) to the second device(s).

In some scenarios, the number of second device(s) may be multiple, i.e., the first device may convey paging messages for the respective second devices and/or system information required by the respective second devices to the plurality of second devices,.

In one possible manner, before the first device transmits the first information to the second device(s) in the communication links through the RRC connection, the method may further include that the first device receives second information from the second device(s), the second information being used to request paging message(s) for the second device(s) and/or system information required by the second device(s).

Here, in a case where the second information is used to request paging message(s) for the second device(s), the second information may include information required for monitoring the paging message for the second device(s). In a case where the second information is used to request system information required by the second device(s), the second information may include a type of the system information required by the second device(s). That is, if the second device(s) requests paging message(s) for the second device(s) from the first device, the second device(s) may carry information required for monitoring the paging message in the second information, such as identifier(s) of the second device(s), a monitoring period, and the like. If the second device(s) requests the system information required by the second device(s) from the first device, the second device(s) may carry the type of the system information required by the second device(s) in the second information.

Exemplarily, in a case where the second information includes information required for monitoring paging message(s) of the second device(s), the first information may include paging message(s) for the second device(s). In a case where the second information includes a type of the system information required by the second device(s), the first information includes system information required by the second device(s). That is, if the second device(s) carries information required for monitoring the paging message(s) for the second device(s) in the second information, it means that the second device(s) requests the paging message(s) for the second device(s) from the first device, and thus the first device may carry the paging message(s) for the second device(s) in the first information and transmits it to the second device(s). If the second device(s) carries the type of the system information required by the second device(s) in the first information, it means that the second device(s) requests the system information required by the second device(s) from the first device, and thus the first device may carry the system information required by the second device(s) in the first information and transmits it to the second device(s).

In one possible implementation, before the first device transmits the first information to the second device(s) in the communication links through the RRC connection, the method may further comprise obtaining, from the network device, paging message(s) for the second device(s) based on information required for monitoring the paging message(s) for the second device(s), and/or obtaining the system information required by the second device(s) from the network device based on the type of the system information required by the second device(s).

For example, if the second device(s) carries information required for monitoring the paging message(s) for the second device(s) in the second information, the first device may acquire the paging message(s) for the second device(s) from the network device based on the information required for monitoring the paging message(s) for the second device(s), and then carry the acquired paging message(s) in the first information and forward the acquired paging message(s) to the second device(s). If the second device(s) carries the type of the system information required by the second device(s) in the second information, the first device may acquire the system information required by the second device(s) from the network device based on the type of the system information required by the second device(s), and then carry the acquired system information in the first information and forward the acquired system information to the second device(s).

In some embodiments, the first device and the second device(s) are different terminal devices in a communication links, and the first information is used to indicate a radio link state of the first device, or is used to indicate that the first device undergoes a network connection state change or a radio link state change.

Exemplarily, the radio link state may include: Radio Link Failure (RLF). The network connection state change may include cell handover, cell reselection, or RRC connection state change. The radio link state change may include link quality degradation of radio link.

According to the method of the present embodiment, the first device may transmit the first information to non-adjacent second device(s) through RRC connection, thereby indicating to the second device(s) about a radio link state of the first device, or that the first device undergoes a network connection state change or a radio link state change.

In some scenarios, the number of second device(s) may be multiple, i.e., the first device may indicate to a plurality of second devices about the radio link state of the first device, or that the first device undergoes a network connection state change or a radio link state change.

In some embodiments, the first device and the second device(s) are different terminal devices in the communication links, and the first information is used to instruct the second device(s) to measure surrounding radio communication conditions.

Exemplarily, the first information may, for example, indicate that the second device(s) measures Channel Busy Ratio (CBR), and/or link quality between the second device(s) and at least one third device. Here, the third device may be, for example, other terminal device(s) or a network device. The link quality may include, for example, RSRP.

As an example, the first device may instruct the second device(s) to measure and report the CBR measurement through the first information.

As another example, the first device may also instruct the second device(s) to measure and report link quality between the second device(s) and other terminal device(s) through the first information, such as sidelink-reference signal received power (SL-RSRP) or sidelink discovery-reference signal received power (SD-RSRP) between the second device(s) and other terminal device(s).

As yet another example, the first device may also instruct the second device(s) to measure and report link quality between the second device(s) and the network device through the first information, such as a Uu-RSRP between the second device(s) and the network device.

According to the method of the present embodiment, the first device may transmit first information to non-adjacent second device(s) through RRC connection to instruct the second device(s) to measure a surrounding radio communication situation. After the second device(s) completes the corresponding measurement, the corresponding measurement result can be fed back to the first device, so that the first device can learn the link condition of the second device(s) not directly connected in the communication links. The measurement results can be used to assist the first device in making a decision for the next step. For example, when the measurement result shows that the link quality between the second device(s) and a certain terminal device is poor, the first device may instruct the second device(s) to connect to another candidate terminal device.

In some scenarios, the number of second device(s) may be multiple, i.e., the first device may instruct a plurality of second devices to measure surrounding wireless communication conditions.

In some embodiments, the first device and the second device(s) are different terminal devices in communication links, and the first information is used to indicate quality of service (QoS) between the second device(s) and the fourth device. The second device(s) and the fourth device are adjacent in the communication links.

That is, the first device may configure the QoS between the second device(s) and an adjacent device for the second device(s) through the first information, or the first device may configure, for a non-adjacent terminal device (such as the second device(s)), the QoS on a certain hop in which the terminal device is located through cross-hop RRC connection. For example, in FIG. 6, the relay terminal device # 1 (an example of the first device) may configure QoS on the third hop and/or the fourth hop for the relay terminal device # 3 through a cross-hop PC5-RRC connection with the relay terminal device # 3 (an example of the second device(s)).

As one implementation, the number of second device(s) may be multiple, that is, the first device may configure QoS for a plurality of non-adjacent second devices through RRC connection. As another implementation, in a case where there is RRC connection between the first device and all terminal devices in the communication links, the first device may configure QoS for all terminal devices in the communication links through the RRC connection, or the first device may configure a single-hop QoS on each hop, and transmit the configured QoS to the corresponding terminal device through the RRC connection. In this way, the first device can coordinate the QoS allocation of the entire communication links through the centralized QoS allocation manner, thereby facilitating the improvement of the communication performance of the entire communication links.

Exemplarily, the first device may be, for example, any one of the following devices: a source terminal device, a target device, a device in the communication links closest to the source terminal device, a device in the communication links that is closest to the target device, and a device determined based on a preset rule. Here, the preset rule can be defined by, for example, a protocol. For example, it may be defined that the most capable terminal device in the communication links is determined as the first device. For another example, it may be defined that a terminal device in a communication links that is in a connected state or is located within the network coverage is determined as the first device. In the present embodiment, the first device may also be referred to as a central terminal device or a control terminal device.

According to the method of the present embodiment, the first device can configure, for a non-adjacent terminal device, QoS on a certain hop where the terminal device is located through cross-hop RRC connection, thereby simplifying the QoS allocation method and improving the efficiency of QoS allocation.

In some embodiments, the first device and the second device(s) are different terminal devices in the communication links, and the first information is used to configure transmission resource(s) of the second device(s).

That is, the first device may configure transmission resource(s) for the second device(s) through the first information. Alternatively, the first device may configure transmission resource(s) for the non-adjacent terminal device (such as the second device(s)) through cross-hop RRC connection.

As one implementation, the number of second device(s) may be multiple, that is, the first device may configure transmission resource(s) for a plurality of non-adjacent second devices through RRC connection. As another implementation, in a case where there is RRC connection between the first device and all terminal devices in the communication links, the first device may further configure transmission resources for all terminal devices in the communication links through the RRC connection. In this way, the purpose of reducing delay can be achieved through centralized resource allocation.

As one example, the transmission resource(s) allocated by the first device for the second device(s) may be selected by the first device from a resource pool, for example. As another example, the transmission resource(s) allocated by the first device for the second device(s) may be allocated by the target device, and then the first device transmits the transmission resource(s) allocated by the target device for the second device(s) to the second device(s). Herein, the target device is a network device.

Exemplarily, the first device that allocates transmission resource(s) to the second device(s) may be, for example, any one of the following devices: a source terminal device, a target device, a device in the communication link closest to the source terminal device, a device in the communication links that is closest to the target device, and a device determined based on a preset rule. Here, the preset rules can be defined by, for example, a protocol. For example, it may be defined that the most capable terminal device in the communication link is determined as the first device. For another example, it may be defined that a terminal device in a communication links that is in a connected state or is located within the network coverage is determined as the first device. In the present embodiment, the first device may also be referred to as a central terminal device or a control terminal device.

According to the method of the present embodiment, the first device may configure transmission resources for non-adjacent terminal devices through the cross-hop RRC connection, thereby simplifying the resource allocation method and improving the efficiency of resource allocation.

In some embodiments, the first device and the second device(s) are different terminal devices in the communication link, and the first information is an RRC reconfiguration message, which may include at least one of Sidelink Relay Adaptation Protocol (SRAP) configuration, RLC configuration, and MAC configuration. Here, the SRAP configuration includes an identifier(s) assigned to the second device(s) and/or an identifier(s) of other terminal device(s) in the communication link.

That is, the RRC reconfiguration message may be carried in the cross-hop message (first information). As one implementation, the number of second device(s) may be a plurality, that is, the first device may transmit RRC reconfiguration message to a plurality of non-adjacent second devices through RRC connection.

In some embodiments, the first device and the second device(s) are different terminal devices in the communication links. RLF occurs between the first device and the second device(s) when the second condition is met. The second condition includes: RLF occurs between any two adjacent devices between the first device and the second device(s), and/or, RLF occurs between any two adjacent devices in the communication links.

That is, the reason why RLF occurs for RRC connection across a hop may include at least one of the following.
a. RLF occurs between any two adjacent devices between the first device and the second device(s).

For example, assuming that there is a relay terminal device between the first device and the second device(s), if an RLF occurs between the first device and the relay terminal device, and/or, between the second device(s) and the relay terminal device, an RLF occurs between the first device and the second device(s).

b. RLF occurs between any two adjacent devices in the communication links. That is, the occurrence of RLF between any two adjacent devices in the communication links causes the occurrence of RLF between the first device and the second device(s).

In some embodiments, the first device and the second device(s) are different terminal devices in the communication links, and there is RRC connection between the first device and the second device(s), and the RRC connection between the first device and the second device(s) is released when the third condition is satisfied. The third condition includes: the RRC connection between any two adjacent devices between the first device and the second device(s) is released, and/or, the RRC connection between any two adjacent devices in the communication links is released.

That is, the reason for a cross-hop RRC connection release may include at least one of the following.
a. Between the first device and the second device(s), the RRC connection between any two adjacent devices is released.

For example, assuming that there is a relay terminal device between the first device and the second device(s), if the RRC connection between the first device and the relay terminal device is released, and/or the RRC connection between the second device(s) and the relay terminal device is released, the RRC connection between the first device and the second device(s) is released.

b. RRC connection between any two adjacent devices in the communication links is released. That is, the release of the RRC connection between any two adjacent devices in the communication links causes the release of the RRC connection between the first device and the second device(s).

In some embodiments, the second device(s) is a target device, and the target device is a network device, the first information is used to indicate at least one of: the first device undergoes radio link failure, channel quality (e.g., RSRP) between the first device and at least one fifth device, and identifiers of all terminal devices in the communication links.

That is, the first device may report the first information to the network device through a cross-hop RRC connection. The first device may be, for example, a source terminal device or a relay terminal device.

In some embodiments, the second device(s) is a target device, and the target device is a network device, and the transmission resource(s) of the first device is configured by the network device for the first device through RRC connection.

That is, the network device (target device) may allocate transmission resource(s) to the first device through cross-hop RRC connection. The first device may be, for example, a source terminal device or a relay terminal device.

As an implementation mode, in a case where there is RRC connection between the network device and each terminal device in the communication links, the network device may configure transmission resource(s) for each terminal device in the communication links (including terminal devices directly connected and terminal devices not directly connected) through the RRC connection.

In some embodiments, the method may further include: the first device transmits third information to a sixth device in the communication links through the RRC connection, the third information relating to radio resource management. The sixth device is adjacent to the first device in the communication links.

That is, in scenario 1, the first device may not only transmit the first information related to radio resource management to the non- adjacent second device(s) in the communication links through the RRC connection, but also transmit the third information related to radio resource management to the adjacent sixth device in the communication links through the RRC connection.

Scenario 2: the second device(s) is adjacent to the first device in the communication link.

In some embodiments, the first device is a terminal device in the communication links that does not meet a first condition, the target device is a network device, and the second device(s) is an uplink next-hop terminal device for the first device. The first information is used to request a paging message for the first device, and/or system information required by the first device.

Exemplarily, in a case where the first information is used to request a paging message for the first device, the first information may include information required for monitoring a paging message for the first device. In a case where the first information is used to request system information required by the first device, the first information may include a type of the system information required by the first device. That is, if the first device requests a paging message for the first device, the first device may carry information required for monitoring the paging message in the first information, such as an identifier (ID) of the first device, a monitoring period, and the like. If the first device requests system information required by the first device, the first device may carry the type of the system information required by the first device in the first information.

Exemplarily, the first condition may include at least one of: being located within signal coverage of the network device, being a device closest to the network device in the communication links, and being able to acquire paging messages and/or system information from the network device directly.

According to the method of the present embodiment, the first device that does not meet the first condition may transmit first information to adjacent second device(s) through RRC connection to request a paging message for the first device and/or system information required by the first device. In one possible case, the second device(s) is terminal device(s) (relay terminal device(s)) that does not meet the first condition, and in this case, the second device(s) may continue to forward the first information to the next-hop device, that is, to the uplink next-hop terminal device for the second device(s), until the first information is forwarded to a terminal device meeting the first condition. In another possible case, the second device(s) is a terminal device that meets the first condition, and in this case, the second device(s) may stop forwarding the first information to the next-hop device.

In some embodiments, the first device is a terminal device in the communication links that does not meet the first condition, the target device is a network device, and the second device(s) is an uplink next-hop terminal device for the first device. The first information is used to request a paging message for the seventh device, and/or system information required by the seventh device; In the communication links, the seventh device is an uplink previous-hop terminal device of the first device, a source terminal device, or any one device, between the first device and the source terminal device, that has RRC connection with the first device.

As an implementation, the seventh device may transmit the first information to the first device, and if the first device does not satisfy the first condition, the first device may forward the first information from the seventh device to the next hop terminal device (that is, the second device(s)) in the uplink direction. In one possible case, if the second device(s) still does not satisfy the first condition, the second device(s) may continue to forward the first information to the next hop device, that is, to the next hop terminal device of the second device(s) in the uplink direction, until the first information is forwarded to the terminal device that satisfies the first condition. In another possible case, if the second device(s) satisfies the first condition, then the second device(s) may stop forwarding the first information to the next hop device.

Exemplarily, in a case where the first information is used to request a paging message for a seventh device, the first information may include information required for monitoring a paging message for the seventh device. In a case where the first information is used to request system information required by the seventh device, the first information may include a type of the system information required by the seventh device.

Exemplarily, the first condition may include at least one of: being located within signal coverage of the network device, being a device closest to the network device in the communication links, and being able to acquire a paging message and/or system information from the network device directly.

In one possible manner, before the first device transmits the first information to the second device(s) in the communication links through the RRC connection, the method may further include receiving the first information from the seventh device through the RRC connection.

In one possible manner, before the first device transmits the first information to the second device(s) in the communication links through the RRC connection, the method may further comprise the first device adding second information to the first information, the second information being used to request a paging message for the first device, and/or system information required by the first device. That is, the first device may further add the second information to the first information before forwarding the first information from the seventh device to the second device(s). In this case, the first information transmitted by the first device to the second device(s) may include the information for requesting a paging message for the seventh device and/or the system information required by the seventh device (content of the original first information), and, the information for requesting a paging message for the first device and/or the system information required by the first device (content of the newly added second information), at the same time.

Exemplarily, in a case where the second information is used to request a paging message for the first device, the second information may include information required for monitoring a paging message for the first device. In a case where the second information is used to request system information required by the first device, the second information may include a type of system information required by the first device.

In some embodiments, the target device is a network device, the second device(s) is a downlink next-hop terminal device of the first device, or is any one terminal device, between the first device and the source terminal device, that has RRC connection with the first device. The first information includes a paging message for the eighth device, and/or system information required by the eighth device.

In one possible case, the eighth device is a second device(s). That is, the eighth device is a downlink next-hop terminal device of the first device in the downlink direction, and the first device may transmit a paging message for the eighth device and/or the system information required by the eighth device to the eighth device through RRC connection.

In another possible case, the eighth device is a source terminal device or any one terminal device between the second device(s) and the source terminal device. That is, the first device may transmit a paging message for the eighth device and/or system information required by the eighth device to the second device(s) through the RRC connection. In some embodiments, after receiving the paging message for the eighth device and/or the system information required by the eighth device, the second device(s) may forward the information to the eighth device. For example, in a case where there is RRC connection between the second device(s) and the eighth device, the second device(s) may forward the information to the eighth device through the RRC connection. For another example, the second device(s) may further forward the information hop by hop to the eighth device in a manner of hop-by-hop forwarding. In one possible manner, the "paging message for the eighth device and/or the system information required by the eighth device" and the "paging message(s) for the second device(s) and/or the system information required by the second device(s)" may be carried in the same information. In such case, after receiving the information, the second device(s) may first remove the paging message(s) for the second device(s) and/or the system information required by the second device(s) included in the information, and then transmit the information to the eighth device.

As an example, in a case where the first device meets the first condition, the first information may be acquired by the first device from the network device. Exemplarily, the first condition may include at least one of: being located within signal coverage of the network device, being a device closest to the network device in the communication links, being able to acquire paging message and/or system information from the network device directly. Since the terminal device meeting the first condition usually has the ability to directly obtain the paging message and/or the system information from the network device, the first device may obtain the information requested by the eighth device (such as the paging message for the eighth device and/or the system information required by the eighth device) from the network device, and send the acquired information to the second device(s), and then the second device(s) forwards the information to the eighth device.

As another example, in a case where the first device does not meet the above-described first condition, the first information may be acquired by the first device from the ninth device in the communication links. The ninth device may be, for example, a downlink previous-hop terminal device for the first device, or may be any one terminal device, between the first device and the network device, that has RRC connection with the first device. Since the terminal device that does not meet the first condition usually does not have the ability to directly obtain the paging message and/or system information from the network device, the first device needs to obtain the information requested by the eighth device through the ninth device. For example, the information requested by the eighth device may be directly acquired by the ninth device from the network device (if the ninth device meets the first condition), or may be transmitted hop by hop to the ninth device by the terminal device meeting the first condition.

In one possible manner, before the first device transmits the first information to the second device(s) in the communication links through the RRC connection, the method may further include that the first device receives, through the second device(s), fourth information from the eighth device, the fourth information being used to request a paging message for the eighth device, and/or system information required by the eighth device. In a case where the fourth information is used to request a paging message for the eighth device, the fourth information may include information required for monitoring the paging message for the eighth device. In a case where the fourth information is used to request system information required by the eighth device, the fourth information may include a type of the system information required by the eighth device.

That is, request information (i.e. fourth information) from the eighth device may be received through the second device(s) before the first device transmits the information requested by the eighth device (paging message for the eighth device, and/or system information required by the eighth device) to the second device(s).

Exemplarily, in a case where the fourth information includes information required for monitoring a paging message for the eighth device, the first information may include a paging message for the eighth device. In a case where the fourth information includes a type of the system information required by the eighth device, the first information may include the system information required by the eighth device. That is, if the fourth information contains information required for monitoring the paging message for the eighth device, it means that the eighth device requests the paging message for the eighth device, and thus the paging message for the eighth device may be carried in the first information and transmitted to the eighth device. If the type of the system information required by the eighth device is included in the fourth information, it means that the eighth device requests the system information required by the eighth device, and thus the system information required by the eighth device can be carried in the first information and transmitted to the eighth device.

In some embodiments, the first information is used to indicate a radio link state of the first device, or, is used to indicate that the first device undergoes a network connection state change or a radio link state change.

Exemplarily, the radio link state may include RLF. The network connection state change may include cell handover, cell reselection, or RRC connection state change. The radios link state change may include a link quality degradation of the radio link.

According to the method of the present embodiment, the first device may transmit the first information to adjacent second device(s) through RRC connection, thereby indicating to the second device(s) about a radio link state of the first device or that the first device undergoes a network connection state change or a radios link state change.

In some scenarios, the second device(s) may forward the first information further to the next-hop device to inform the next-hop device about the radio link state of the first device or that the first device undergoes a network connection state change or a radio link state change.

In some embodiments, the second device(s) is a next-hop terminal device of the first device, and the first information is used to indicate a radio link state of the tenth device, or is used to indicate that the tenth device undergoes a network connection state change or a radio link state change. The tenth device is a previous-hop terminal device for the first device, or a terminal device not adjacent to the first device in the communication links.

Exemplarily, the first device may, for example, acquire first information from the tenth device, and may forward the first information to a next-hop terminal device (second terminal device(s)). That is, the first device may forward the first information from the tenth device.

In one possible case, the first information from the tenth device may for example be acquired by the first device from the tenth device via RRC connection. In another possible case, the tenth device may further forward the first information hop-by-hop to the first device in a manner of hop-by-hop forwarding, that is, the first information may be acquired by the first device from the previous-hop terminal device.

In one possible manner, before the first device transmits the first information to the second device(s) in the communication links via the RRC connection, the method may further include that the first device adds fifth information to the first information, the fifth information being used to indicate a radio link state of the first device or that the first device undergoes a network connection state change or a radio link state change. That is, the first device may further add the fifth information to the first information before forwarding the first information from the tenth device to the second device(s). In this case, the first information transmitted by the first device to the second device(s) may include both the content of the original first information and the content of the newly added fifth information. The original first information is used to indicate the radio link state of the tenth device or that the tenth device undergoes the network connection state change or the radio link state change. The newly added fifth information is used to indicate a radio link state of the first device or that the first device undergoes a network connection state change or a radio link state change.

Exemplarily, the fifth information may include at least one of the following information: an identifier of the first device, an identification of the number of transmission hops associated with a radio link state of the first device, and an identification of the number of transmission hops associated with the occurrence of a network connection state change or a wireless link state change of the first device.

For example, assuming that the radio link state includes RLF, if the RLF occurs on a certain hop in which the first device is located, the identification of the number of transmission hops associated with the radio link state of the first device is the identification of the hop.

For another example, assuming that the network connection state change includes the RRC connection state change, if the RRC connection state changes on a certain hop in which the first device is located, the identification of the number of transmission hops associated with the network connection state change of the first device is the identification of the hop.

Similarly, the first information may further comprise at least one of: an identifier of the tenth device, an identification of the number of transmission hops associated with a radio link state of the tenth device, and an identification of the number of transmission hops associated with the occurrence of the network connection state change or the radio link state change of the tenth device.

In some embodiments, the first information may be used to indicate at least one of: QoS between the first device and the second device(s), QoS can be allocated by the second device(s), and the number of transmission hops of the communication links. Here, the QoS can be allocated by the second device(s) may also be understood as the remaining unallocated QoS in the communication links in addition to the allocated QoS. It can be understood that the total QoS that can be allocated in the communication links is the end-to-end QoS between the source terminal device and the target device.

In one possible manner, the method may further include determining (allocating) QoS between the first device and the second device(s) before the first device transmits the first information to the second device(s) in the communication links via the RRC connection.

For example, assuming that the first device is the source terminal device in Figure 8 and the second device(s) is the relay terminal device #1 in Figure 8, the source terminal device can allocate the QoS on the first hop (that is, the QoS between the first device and the second device(s)), and can send the QoS on the first hop and the remaining unallocated QoS in the communication links (that is, the QoS can be allocated by the second device(s)) to the relay terminal device #1, so that the relay terminal device #1 can allocate the QoS on the second hop from the remaining unallocated QoS, and send the QoS on the second hop and the remaining unallocated QoS to the relay terminal device #2, and so on.

In some scenarios, the first information may further include one or more of the following information as reference information for the second device(s) when making QoS allocation: the number of transmission hops of the communication links, the number of transmission hops where the second device(s) is located, and the number of remaining transmission hops to which QoS is not allocated.

In some embodiments, the second device(s) is a next-hop terminal device for the first device, the first information is an RRC reconfiguration message between the first device and the second device(s), and the RRC reconfiguration message may include, for example, at least one of the following: SRAP configuration, RLC configuration, and the configuration of the MAC.

As one implementation, the first information may be determined by the first device, or, the first information may be determined by the first device based on an RRC reconfiguration message with the previous-hop terminal device. That is, the RRC configuration between a certain terminal device and the next-hop terminal device may be determined by the local-hop terminal device, or by the local-hop terminal device according to the RRC configuration between the terminal device and the previous-hop terminal device, that is, the local-hop terminal device needs to decode the RRC reconfiguration message sent to itself by the previous-hop terminal device, and determine the RRC configuration between itself and the next-hop terminal device according to the RRC reconfiguration message.

In some embodiments, the second device(s) is a target device, and the target device is a network device, the first information is used to indicate at least one of following information: the eleventh device undergoes a radio link failure, channel quality between the eleventh device and the at least one twelfth device, an identifier of the eleventh device, and the number of transmission hops between the eleventh device and the network device. The eleventh device is a terminal device that does not have RRC connection with the network device in the communication links.

That is, the terminal device (such as the first device) in the connected state may report the relevant information of the terminal device (such as the eleventh device) in the disconnected state to the network device through the RRC connection, so that the network device can learn the relevant situation of the terminal device in the disconnected state.

In some embodiments, the method may further include the following operation. The first device transmits sixth information to the thirteenth device in the communication links through the RRC connection. The sixth information relates to radio resource management. The thirteenth device is not adjacent to the first device in the communication links.

That is, in scenario 2, the first device may transmit the sixth information related to radio resource management to the non-adjacent thirteenth device in the communication links through the RRC connection, in addition to the first information related to radio resource management to the adjacent second device(s) in the communication links through the RRC connection.

Note that, for example, the communication links in the embodiment of the present application may have at least one of the following characteristics.

There is RRC connection between all adjacent devices in the communication links; there is RRC connection between a part or all of non-adjacent devices in the communication links; in a case where the target device is a network device, there is RRC connection between a part or all of the terminal devices in the communication links and the network device; in a case where the target device is a network device, there is RRC connection between the terminal device closest to the network device in the communication links and all or part of other devices; there is RRC connection between a part or all of the devices in the communication links and the fourteenth device.

The fourteenth device may be, for example, any one of the following devices: a source terminal device, a target device, a device in the communication links closest to the source terminal device, a device in the communication links that is closest to the target device, a device determined based on a preset rule. Here, the preset rules can be specified by, for example, a protocol. For example, it may be specified that the most capable terminal device in the communication links is determined as the fourteenth device. For another example, it may be specified that a terminal device in the communication links that is in a connected state or within the network coverage is determined as a fourteenth device. The fourteenth device may also be referred to as a central terminal device or a control terminal device.

In some embodiments, whether the first device establishes an RRC connection with other devices may be determined by the first device or the network device. That is, the first device may choose to create RRC connection or not to create RRC connection with other devices based on its own implementation or a network configuration.

In some embodiments, the above first information may be identified, for example, by one or more of the following: RLC channel, bearer identifier (bearer ID), logical channel (LCH). That is, the terminal device (such as the second device(s)) may identify the first information by one or more of the RLC channel, the bearer ID, and the LCH.

According to the methods in the above scenario 1 and scenario 2, the first device in the communication links may transmit information related to radio resource management to the second device(s) through the RRC connection, thereby realizing the radio resource management procedure in the multi-hop relay scenario, or realizing the control plane flow in the multi-hop relay scenario.

A radio resource management method provided by embodiments of the present application has been described above. In order to facilitate understanding of the embodiments of the present application, a possible implementation flow of the radio resource management method applicable to the embodiments of the present application will be described below with reference to FIG. 6 to FIG. 9.

In FIG. 6 and FIG. 8, the target device may be, for example, a target terminal device, and the communication links may include a source terminal device, a target terminal device, and a plurality of relay terminal devices (relay terminal device # 1 to relay terminal device # 3) between the source terminal device and the target terminal device. That is, FIG. 6 and FIG. 8 may be applicable to a multi-hop U2U relay scenario.

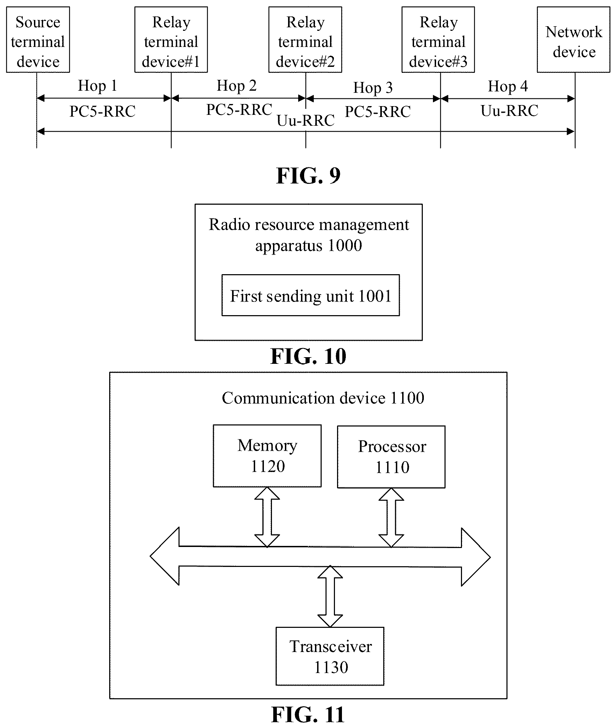

In FIG. 7 and FIG. 9, the target device may be, for example, a network device. A source terminal device, a network device, and a plurality of relay terminal devices (relay terminal device # 1 to relay terminal device # 3) between the source terminal device and the network device may be included in the communication links. That is, FIG. 7 and FIG. 9 may be applicable to a multi-hop U2N relay scenario.

As an example of a network connection mode in a multi-hop relay scenario, in FIG. 6 and FIG. 7, there is RRC connection between all non-adjacent nodes (devices). For example, there is PC5-RRC connection between the source terminal device and the non-adjacent relay terminal device # 2, and between the source terminal device and the non-adjacent relay terminal device # 3, respectively. For example, in FIG. 6, there is PC5-RRC connection between the relay terminal device # 1 and the non-adjacent relay terminal device # 3, and between the relay terminal device # 1 and the non-adjacent target terminal device, respectively. It should be noted that there is also RRC connection between adjacent nodes in FIG. 6 and FIG. 7 (not shown in FIG. 6 and FIG. 7). For example, in FIG. 6, there is PC5-RRC connection for the first hop, the second hop, the third hop, and the fourth hop. For another example, in FIG. 7, the first hop, the second hop, and the third hop all have PC5-RRC connection, and the fourth hop has Uu-RRC connection. It should also be noted that since there is traffic transmission between the source terminal device and the target device (such as the target terminal device in FIG. 6 and the network device in FIG. 7), there is also RRC connection between the source terminal device and the target device (not shown in FIG. 6 and FIG. 7).

In FIG. 6 and FIG. 7, for the respective devices connected through PC5-RRC, the processes that can be implemented include the following processes.

### 1) RRC Reconfiguration Process.

In one possible method, the RRC reconfiguration message may be carried in a cross-hop message. For example, in FIG. 6 and FIG. 7, the source terminal device may transmit an RRC reconfiguration message to the relay terminal device # 2 through cross-hop PC5-RRC connection with the relay terminal device # 2. For another example, in FIG. 6, the relay terminal device # 2 may transmit an RRC reconfiguration message to the target terminal device through cross-hop PC5-RRC connection with the target terminal device.

In another possible method, the RRC reconfiguration message may not be carried in a cross-hop message, but may be configured by per-hop signaling. For example, the source terminal device may transmit the RRC reconfiguration message to the relay terminal device # 1 through the PC5-RRC connection with the relay terminal device # 1. For another example, the relay terminal device # 1 may transmit the RRC reconfiguration message to the relay terminal device # 2 through the PC5-RRC connection with the relay terminal device # 2. For another example, in FIG. 6, the relay terminal device # 3 may transmit the RRC reconfiguration message to the target terminal device through the PC5-RRC connection with the target terminal device.

It should be noted that the above-described RRC reconfiguration process may be executed by any terminal device in the communication links. For example, it may be executed by the source terminal device, the target terminal device, or any relay terminal device. The embodiments of the present application are not limited thereto.

Exemplarily, the RRC reconfiguration message may include, for example, at least one of the following: SRAP configuration, RLC configuration, and MAC configuration. The configuration of the UE-ID and the bearer ID in the SRAP layer may include the UE-ID allocated to the current UE (that is, the UE receiving the RRC reconfiguration message) and the UE-IDs of other UEs on the entire links.

### 2) Radio Link Failure (RLF) Process.

As an example, the reason for cross-hop PC5-RRC radio link failure may include radio link failure occurring at one or more intermediate hops. For example, if a radio link failure occurs in the first hop and/or the second hop, the PC5-RRC radio link between the source terminal device and the relay terminal device # 2 fails. For another example, in FIG. 6, if a radio link failure occurs in the third hop and/or the fourth hop, the PC5-RRC radio link between the relay terminal device # 2 and the target terminal device fails.

As another example, the reason for cross-hop PC5-RRC radio link failure may include radio link failure between any two adjacent devices in the communication links. For example, the PC5-RRC radio link failure between the relay terminal device # 1 and the relay terminal device # 3 may be caused by the radio link failure between any two adjacent devices in the communication links. For example, it may be caused by the radio link failure between the source terminal device and the relay terminal device # 1 (i.e., the first hop).

### 3) PC5-RRC connection release process.

As an example, the reason for cross-hop PC5-RRC connection release may include PC5-RRC connection release occurring at one or more intermediate hops. For example, if the PC5-RRC connection release occurs in the first hop and/or the second hop, the PC5-RRC connection between the source terminal device and the relay terminal device # 2 is released. For another example, in FIG. 6, when the PC5-RRC connection release occurs in the third hop and/or the fourth hop, the PC5-RRC connection between the relay terminal device # 2 and the target terminal device is released.

As another example, the reason for cross-hop PC5-RRC connection release may include PC5-RRC connection release occurring at any one or more hops on the other side. For example, for the relay terminal device # 2, when the PC5-RRC connection is released in the third hop and/or the fourth hop, the PC5-RRC connection between the source terminal device and the relay terminal device # 2 is also released.

As yet another example, the reason for cross-hop PC5-RRC connection release may include PC5-RRC connection release occurring between any two adjacent devices in the communication links. For example, the release of the PC5-RRC connection between the relay terminal device # 1 and the relay terminal device # 3 may be caused by the release of the PC5-RRC connection between any two adjacent devices in the communication links. For example, it may be caused by the PC5-RRC connection release between the source terminal device and the relay terminal device # 1 (i.e., the first hop).

### 4) Request process of paging information and/or system information (applicable to multi-hop U2N relay scenario, such as the scenario shown in FIG. 7).

In this process, a certain terminal device in the communication links (e.g., denoted as terminal device # 1) may send a request message to another terminal device (e.g., denoted as terminal device # 2) having RRC connection, for requesting a paging message for the terminal device # 1 and/or system information required by the terminal device # 1. The request message may be, for example, remote UE information.

As an example, terminal device of each hop (such as terminal device # 1) may directly send the request message to another terminal device meeting the first condition via the RRC connection to request a paging message for the terminal device (terminal device # 1) and/or system information (such as SIB) required by the terminal device.

As another example, terminal device of each hop (such as terminal device # 1) may carry the request message in RRC message of any hop, and if the relay terminal device receiving the request message does not meet the first condition, the relay terminal device receiving the request message needs to continue to forward/send the request message, and finally forward the request message to the terminal device meeting the first condition.

Exemplarily, the first condition may include at least one of: being located within signal coverage of the network device, being a device closest to the network device in the communication links, and being able to acquire the paging message and/or system information from the network device directly.

It should be understood that the above-described terminal device # 1 may be, for example, a source terminal device, or may be a certain relay terminal device (such as a certain relay terminal device that does not meet the first condition), and the embodiments of the present application are not limited thereto.

### 5) Distribution process of paging information and/or system information (applicable to multi-hop U2N relay scenario, as shown in Figure 7).

In 4), the terminal device # 1 may send a request message to the terminal device # 2 to request a paging message for the terminal device # 1 and/or system information required by the terminal device # 1. In 5), a certain terminal device in the communication links (for example, a terminal device meeting the first condition) may acquire the information requested by the terminal device # 1 from the network device based on the request message, and send the information requested by the terminal device # 1 to the terminal device # 1.

As an example, after acquiring the information requested by the terminal device # 1, the terminal device meeting the first condition may directly transmit the information requested by the terminal device # 1 to the terminal device # 1 through a PC5-RRC message (or through a PC5-RRC connection).

As another example, after acquiring the information requested by the terminal device # 1, the terminal device meeting the first condition may transmit the information requested by the terminal device # 1 hop by hop until the information is transmitted to the terminal device # 1.

### 6) Transmission process of notification message.

In this process, the notification message may be transmitted through the PC5-RRC to each of the terminal devices in the communication links by the terminal device that triggers the notification message transmission.

For example, in FIG. 6, when the relay terminal device # 3 triggers transmission of the notification message, the relay terminal device # 3 may transmit the notification message to the source terminal device, the relay terminal device # 1, the relay terminal device # 2, and the target terminal device through the PC5-RRC connection. The notification message may be used to indicate the radio link state (e.g., RLF) of the relay terminal device # 3, or to indicate that a network connection state change (e.g., cell handover, cell reselection, or RRC connection state change) or a radio link state change (e.g., link quality degradation of the radio link) has occurred in the relay terminal device # 3.

It should be understood that the terminal device that triggers the transmission of the notification message may be any terminal device in the communication links. For example, it may be a source terminal device, a target terminal device, or any relay terminal device, and the embodiments of the present application are not limited thereto.

### 7) Measurement process.

In the embodiments of the present application, a certain terminal device in the communication links (for example, denoted as terminal device # 1) may send instruction information to another terminal device (for example, denoted as terminal device # 2) having RRC connection, for instructing the terminal device # 2 to measure the surrounding radio communication situation.

As an example, the terminal device # 1 may configure the terminal device # 2 to measure and report link situation between the terminal device # 2 and other terminal devices, such as SL/SD-RSRP between the terminal device # 2 and other terminal devices.

As another example, the terminal device # 1 may further configure the terminal device # 2 to measure and report link situation between the terminal device # 2 and the network device, such as a Uu-RSRP between the terminal device # 2 and the network device.

As yet another example, the terminal device # 1 may also configure the terminal device # 2 to measure and report the CBR measurement.

It should be understood that the terminal device # 1 described above may be any of the terminal devices in the communication links. For example, it may be a source terminal device, a target terminal device, or any relay terminal device, and the embodiments of the present application are not limited thereto.

### 8) QoS split process.

This flow can be performed, for example, by a determined/defined central terminal device (or referred to as a control terminal device). The central terminal device may for example be determined / defined as any of the following terminal devices: the source terminal device, the target terminal device, the device in the communication links closest to the source terminal device, the device in the communication links closest to the target terminal device, and the device determined based on a preset rule. Here, the preset rule can be defined by, for example, a protocol. For example, it may be specified that the most capable terminal device in the communication links is determined as the central terminal device. For another example, it may be specified that a terminal device in communication links that is in a connected state or located within network coverage is determined as the central terminal device.

In this process, the central terminal device may configure split QoS (single-hop QoS) on non-local hop through cross-hop RRC connection. For example, in FIG. 6, the relay terminal device # 2 may configure the single-hop QoS on the fourth hop through cross-hop PC5-RRC connection with the target terminal device, that is, the QoS between the relay terminal device # 3 and the target terminal device.

### 9) Resource allocation process.

This process may be performed by one of the terminal devices in the communication links, such as the central terminal device described above.

Taking this process being performed by the central terminal device as an example, the central terminal device may configure transmission resources for all terminal devices in the current communication links through RRC message. In this way, through the centralized resource allocation method, the purpose of reducing delay can be achieved. Here, the resources allocated by the central terminal device in a centralized manner can be acquired based on, for example, the first mode or the second mode.

In FIG. 7, for each device connected via Uu-RRC, the processes that can be implemented include the following processes.

### 1) Reporting process of sidelink UE information.

In this process, each terminal device may report at least one of the following contents to the network device through the Uu-RRC connection: the terminal device undergoes RLF, measurement reports (e.g., channel quality between the terminal device and other terminal devices), identification of all terminal devices in the communication links, and the like.

### 2) Resource allocation process.

In this process, the network device may configure transmission resources in the first mode for each terminal device (including terminal devices that are not directly connected) through RRC message.

As another example of the network connection mode in the multi-hop relay scenario, in FIGs. 8 and 9, there is no RRC connection between non-adjacent nodes (excluding the case between the source terminal device and the target device), and there is RRC connection between adjacent nodes. For example, in FIG. 8, there is PC5-RRC connection for the first hop, the second hop, the third hop, and the fourth hop. For another example, in FIG. 9, the first hop, the second hop, and the third hop all have PC5-RRC connection, and the fourth hop has Uu-RRC connection. It should be noted that since there is service transmission between the source terminal device and the target device (such as the target terminal device in FIG. 8 and the network device in FIG. 9), there is also RRC connection between the source terminal device and the target device.

In FIGs. 8 and 9, for individual devices connected via PC5-RRC, the processes that can be implemented include the following processes.

### 1) RRC Reconfiguration Process.

In this process, the configuration of each hop may be determined by the local-hop terminal device or by the local-hop terminal device according to the configuration of the previous-hop, that is, the local-hop terminal device needs to decode the configuration sent to itself by the previous-hop terminal device and determine its own configuration according to the configuration.

Taking the relay terminal device # 1 in FIG. 7 as an example, in a first possible manner, the relay terminal device # 1 can autonomously determine the configuration of the second hop (that is, the configuration between the relay terminal device # 1 and the relay terminal device # 2). In a second possible manner, the relay terminal device # 1 may receive and decode an RRC reconfiguration message from the source terminal device, and determine a configuration on the second hop based on the RRC reconfiguration message.

### 2) Request flow of paging information and/or system information (applicable to multi-hop U2N relay scenario, such as the scenario shown in FIG. 9).

In this process, a terminal device in the communication links (e.g., denoted as terminal device # 1) may send a request message to an adjacent terminal device (e.g., denoted as terminal device # 2) to request a paging message for the terminal device # 1 and/or system information required by the terminal device # 1. The request message may be, for example, remote UE information.

As an example, terminal device of each hop (such as terminal device # 1) may send its own request message to the next-hop terminal device (such as terminal device # 2). If the terminal device # 2 receiving the request message does not meet the first condition, the terminal device # 2 may continue to forward/send the request message onward (or to the next hop), and may add a request message of the terminal device # 2 itself to the request message to request a paging message for the terminal device # 2 and/or system information required by the terminal device # 2. If the terminal device receiving the request message meets the first condition, the terminal device may stop onward forwarding/transmitting.

Exemplarily, the first condition may include at least one of: being located within signal coverage of the network device, being a device closest to the network device in the communication links, being able to acquire paging message and/or system information from the network device directly.

It should be understood that the above-described terminal device # 1 may be, for example, a source terminal device, or may also be a certain relay terminal device (such as a certain relay terminal device that does not meet the first condition), and the embodiments of the present application are not limited thereto.

### 3) Distribution process of paging information and/or system information (applicable to multi-hop U2N relay scenario, as shown in Figure 9).

In this process, each hop terminal device may decode the paging messages and/or system information received by itself and continue to transmit the paging messages and/or system information requested by other terminal devices included in the subsequent communication links.

Taking FIG. 9 as an example, assuming that the information acquired by the relay terminal device # 3 from the network device includes paging messages and system information that are requested by the relay terminal device # 3, the relay terminal device # 2, and the relay terminal device # 1, the relay terminal device # 3 may transmit the paging messages and system information that are requested by the relay terminal device # 2 and the relay terminal device # 1 to the relay terminal device # 2 after decoding the acquired information. Further, the relay terminal device # 2 may decode the information from the relay terminal device # 3, and then transmit the paging message and the system information requested by the relay terminal device # 1 to the relay terminal device # 1.

### 4) Transmission process of Notification Message.

In this process, the terminal device that triggers the transmission of the notification message may send, through the PC5-RRC connection, the notification message to the terminal device directly connected with it, and the terminal device that receives the notification message may continue to forward it backward (to next hop).

In some embodiments, the terminal device receiving the notification message may further add its own notification information (if triggered) to the message, and carry the identifier of the terminal device triggering the message transmission, and/or the identification of the number of transmission hops associated with triggering the message transmission (or hop identification/hop level) in the notification message. For example, if the reason for triggering the message transmission is that the RLF is transmitted on a certain hop, then the identification of the number of transmission hops associated with triggering the message transmission is the identification of the hop.

For example, in FIG. 8, if the relay terminal device # 3 triggers transmission of a notification message, the relay terminal device # 3 may transmit the notification message to the relay terminal device # 2 directly connected to it and the target terminal device through the PC5-RRC connection, and the notification message may contain, for example, the identifier of the relay terminal device # 3 and/or the identification of the number of transmission hops associated with triggering the relay terminal device # 3 to transmit the notification message. After receiving the notification message, the relay terminal device # 2 may add its own notification message to the notification message, and carry the identifier of the relay terminal device # 2 and/or the identification of the number of transmission hops associated with triggering the relay terminal device # 2 to send the notification message in the notification message. Further, the relay terminal device # 2 may transmit the notification messages of the relay terminal device # 3 and the relay terminal device # 2 to the relay terminal device # 1.

It should be understood that the terminal device that triggers the transmission of the notification message may be any terminal device in the communication links. For example, it may be the source terminal device, the target terminal device, or any relay terminal device, and the embodiments of the present application are not limited thereto.

The notification message may be used to indicate the radio link state (such as RLF) of the terminal device that triggers the notification message transmission, or to indicate that the terminal device undergoes a network connection state change (such as cell handover, cell reselection, or RRC connection state change) or a radio link state change (e.g., link quality degradation of the radio link).

### 5) QoS split process.

In this process, each terminal device may allocate the QoS on its own local-hop. In some embodiments, each terminal device may also send the QoS of its own local-hop and the remaining unallocated QoS to the next-hop terminal device, so that the next-hop terminal device can further allocate the QoS of the hop where the next-hop terminal device is located.

As an example, in FIGs. 8 and 9, the relay terminal device # 1 may allocate QoS on the first hop and may transmit the remaining unallocated QoS to the relay terminal device # 2, so that the relay terminal device # 2 may allocate QoS for the second hop from the remaining unallocated QoS and transmit the remaining unallocated QoS to the relay terminal device # 3, and so on.

As another example, in FIGs. 8 and 9, the source terminal device may allocate the QoS on the first hop and may transmit the QoS on the first hop and the remaining unallocated QoS to the relay terminal device # 1, so that the relay terminal device # 1 may allocate the QoS for the second hop from the remaining unallocated QoS and transmit the QoS for the second hop and the remaining unallocated QoS to the relay terminal device # 2, and so on.

In some embodiments, QoS split is performed in the above-described manner, and each terminal device further needs to acquire one or more of the following information.
a. The number of transmission hops on the communication links. For example, in FIGs. 8 and 9, the number of transmission hops is 4.
b. The number of transmission hops where the current terminal device is located. For example, in FIGs. 8 and 9, the number of transmission hops in which the relay terminal device # 1 is located is the first hop, and the number of hops in which the relay terminal device # 2 is located is the second hop.
c. The number of remaining transmission hops that Qos has not been allocated. For example, in FIGs. 8 and 9, after the source terminal device allocates QoS for the first hop, the number of remaining transmission hops that QoS has not been allocated is 3. Therefore, the source terminal device may transmit the QoS for the first hop and the remaining unallocated QoS to the relay terminal device # 1, and may also inform the relay terminal device # 1 of the number of remaining transmission hops (3 hops) that QoS has not been allocated, so that the relay terminal device # 1 may perform the next step of QoS split based on the remaining unallocated QoS and the number of remaining transmission hops that QoS has not been allocated.
d. Information related to CBR.

In FIG. 9, for each device connected via Uu-RRC, processes that can be implemented include the following processes.

### 1) Reporting process of sidelink UE information.

In this process, the terminal device in the connected state may report one or more of the following information of all terminal devices in the non-connected state in the communication links to the network device through the Uu-RRC connection:.

The disconnected terminal device undergoes RLF, a measurement report of the disconnected terminal device (such as channel quality between the disconnected terminal device and other terminal devices), an identifier of the disconnected terminal device (L2 ID), and the number of the transmission hops between the disconnected terminal device and the network device.

The embodiments of the present application design a control plane flow in a multi-hop U2U/U2N relay scenario, and realize RRM in a multi-hop relay scenario.

Note that the network connection methods in FIGs. 7 to 9 are merely examples for convenience of understanding. In the multi-hop relay scenario according to the embodiments of the present application, possible connection methods may further include at least one of the following.

When the target device is a network device, that is, in a multi-hop U2N relay scenario, there is Uu-RRC connection between a part or all of the terminal devices in the communication links and the network device.

When the target device is a network device, that is, in a multi-hop U2N relay scenario, there is PC5-RRC connection between the terminal device closest to the network device in the communication links and all or a part of other terminal devices.

There is RRC connection between a part or all of the devices in the communication links and the determined/defined central terminal device (or referred to as a control terminal device).

In some embodiments, the selection may also be made to create RRC connection or not to create based on UE implementation or network configuration. In other words, whether a certain terminal device establishes RRC connection with other devices may be determined by the terminal device or the network device.

It is further to be noted that in each network connection method according to the embodiments of the present application, if there is RRC connection between non-adjacent nodes, the process corresponding to FIGs. 6 and 7 can be applied. If there is no RRC connection between non-adjacent nodes, the process corresponding to FIGs. 8 and 9 described above can be applied.

It is further to be noted that in the multi-hop U2N relay, if there is no RRC connection between the relay terminal and the network device, it means that an idle/inactive terminal is supported to be a relay terminal to transmit data to the remote terminal.

The preferred embodiments of the present application have been described in detail above with reference to the accompanying drawings, but the present application is not limited to the specific details in the above-described embodiments. Within the scope of the technical concept of the present application, a variety of simple modifications can be made to the technical solutions of the present application, and these simple modifications all belong to the scope of protection of the present application. For example, the specific technical features described in the above-described embodiments may be combined in any suitable manner without contradiction, and various possible combinations will not be described herein in order to avoid unnecessary duplication. For example, various embodiments of the present application may be combined arbitrarily, and as long as they do not violate the idea of the present application, they should also be regarded as the disclosure of the present application. For another example, on the premise that there is no conflict, each embodiment described in the present application and/or the technical features in each embodiment can be arbitrarily combined with the prior art, and the technical solution obtained after the combination should also fall within the scope of protection of the present application.

It should also be understood that in various method embodiments of the present application, the size of the sequence numbers of the above-described processes does not mean the sequence of execution, and the sequence of execution of each process should be determined by its function and internal logic, and should not constitute any limitation on the implementation of the embodiments of the present application. Further, in the embodiments of the present application, the terms "downlink", "uplink" and "sidelink" are used to indicate a transmission direction of a signal or data. Herein, "downlink" is used to indicate a first direction that the transmission direction of the signal or data is transmitting from a site to a user equipment of a cell, "uplink" is used to indicate a second direction that the transmission direction of the signal or data is transmitting from a user equipment of a cell to a site, and "sidelink" is used to indicate a third direction that the transmission direction of the signal or data is transmitting from a user equipment 1 to a user equipment 2. For example, "downlink signal" indicates that the transmission direction of the signal is the first direction. In addition, in the embodiments of the present application, the term "and/or" is only one kind of association relationship describing association objects, and indicates that there may be three kinds of relationships. Specifically, A and/or B may represent three cases: A exists alone, A and B exist simultaneously, and B exists alone. In addition, the character "/" in this disclosure generally indicates that the related objects before and after are in an "or" relationship.

Based on the above-described embodiments, the embodiments of the present application provide corresponding radio resource management devices.

FIG. 10 is a schematic diagram of a structural composition of a radio resource management apparatus according to an embodiment of the present application, and is applied to a first device. Communication links in which the radio resource management apparatus 1000 is located include a source terminal device, a target device, and a plurality of relay terminal devices between the source terminal device and the target device. As shown in FIG. 10, the radio resource management apparatus 1000 (hereinafter simply referred to as apparatus 1000) includes:

The first transmission unit 1001 is configured to transmit first information to the second device(s) in the communication links through RRC connection, the first information being related to radio resource management.

In some embodiments, the second device(s) and the apparatus 1000 are not adjacent in the communication links.

In some embodiments, the apparatus 1000 is a terminal device in the communication links that does not meet the first condition, the second device(s) is terminal device(s) in the communication links that meets the first condition, and the target device is a network device. The first information is used for requesting a paging message for the apparatus 1000, and/or system information required by the apparatus 1000. The first condition includes at least one of: being located within signal coverage of the network device, being a device closest to the network device in the communication links, and being able to acquire paging message and/or system information from the network device directly.

In some embodiments, in a case where the first information is used for requesting the paging message for the apparatus 1000, the first information includes information required t for monitoring the paging message for the apparatus 1000. In a case where the first information is used for requesting system information required by the apparatus 1000, the first information includes a type of the system information required by the apparatus 1000.

In some embodiments, the apparatus 1000 is a terminal device in the communication links that meets the first condition, the second device(s) is terminal device(s) in the communication links that does not meet the first condition, and the target device is a network device. The first information includes paging message(s) for the second device(s) and/or system information required by the second device(s). The first condition includes at least one of: being located within signal coverage of the network device, being a device closest to the network device in the communication links, and being able to acquire paging messages and/or system information from the network device directly.

In some embodiments, the apparatus 1000 further comprises a first receiving unit for receiving second information from the second device(s) before transmitting the first information to the second device(s) in the communication links through the RRC connection. The second information is used for requesting paging message(s) for the second device(s) and/or system information required by the second device(s). In a case where the second information is used for requesting the paging message(s) for the second device(s), the second information includes information required for monitoring the paging message(s) for the second device(s). In a case where the second information is used for requesting system information required by the second device(s), the second information includes the type of the system information required by the second device(s).

In some embodiments, in a case where the second information includes information required t for monitoring paging message(s) for the second device(s), the first information includes the paging message for the second device(s). In a case where the second information includes a type of the system information required by the second device(s), the first information includes the system information required by the second device(s).

In some embodiments, the apparatus 1000 further includes a first acquisition unit, which is used for acquiring, based on the information required for monitoring the paging message(s) for the second device(s), the paging message(s) for the second device(s) from the network device before transmitting the first information to the second device(s) in the communication links through the RRC connection; and/or acquiring, based on the type of the system information required by the second device(s), the system information required by the second device(s) from the network device.

In some embodiments, the apparatus 1000 and the second device(s) are different terminal devices in a communication links. The first information is used to indicate a radio link state of the apparatus 1000, or indicate that the apparatus 1000 undergoes a network connection state change or a radio link state change.

In some embodiments, the apparatus 1000 and the second device(s) are different terminal devices in a communication links. The first information is used to instruct the second device(s) to measure CBR and/or link quality between the second device(s) and the at least one third device.

In some embodiments, the link quality includes RSRP.

In some embodiments, the apparatus 1000 and the second device(s) are different terminal devices in the communication links. The first information is used to indicate quality of service (QoS) between the second device(s) and the fourth device. The second device(s) is adjacent to the fourth device in the communication links.

In some embodiments, the apparatus 1000 and the second device(s) are different terminal devices in communication links. The first information is used to configure transmission resources(s) of the second device(s).

In some embodiments, the transmission resource(s) of the second device(s) is selected by the apparatus 1000 from a resource pool or is allocated by a target device, which is a network device.

In some embodiments, the apparatus 1000 is any one of the following devices: the source terminal device, the target device, the device in the communication links that is closest to the source terminal device, the device in the communication links that is closest to the target device; and the device determined based on a preset rule.

In some embodiments, the apparatus 1000 and the second device(s) are different terminal devices in the communication links. The first information is an RRC reconfiguration message, and the RRC reconfiguration message includes at least one of: a sidelink relay adaptation protocol (SRAP) configuration, a radio link control configuration, and a media access control configuration. The SRAP configuration includes identifier(s) assigned to the second device(s) and/or identifiers of other terminal devices in the communication links.

In some embodiments, the apparatus 1000 and the second device(s) are different terminal devices in the communication links. In a case where the second condition is satisfied, a radios link failure occurs between the apparatus 1000 and the second device(s). The second condition includes a radios link failure occurs between any two adjacent devices between the apparatus 1000 and the second device(s), or a radio link failure occurs between any two adjacent devices in the communication links.

In some embodiments, the apparatus 1000 and the second device(s) are different terminal devices in the communication links, and there is RRC connection between the apparatus 1000 and the second device(s). In a case where the third condition is satisfied, the RRC connection between the apparatus 1000 and the second device(s) is released. The third condition includes RRC connection between any two adjacent devices between the device 1000 and the second device(s) is released, or the RRC connection between any two adjacent devices in the communication links is released.

In some embodiments, the target device is a network device or a terminal device.

In some embodiments, the number of second device(s) is one or more.

In some embodiments, the second device(s) is a target device, and the target device is a network device. The first information is used to indicate at least one of: the apparatus 1000 undergoes a radio link failure, channel quality between apparatus 1000 and at least one fifth device, and identifiers of all terminal devices in the communication links.

In some embodiments, the second device(s) is a target device, and the target device is a network device. Transmission resource(s) of the apparatus 1000 is configured for the apparatus 1000 by a network device through RRC connection.

In some embodiments, the apparatus 1000 further includes a second transmitting unit for transmitting third information to the sixth device in the communication links through the RRC connection. The third information is related to radio resource management, and the sixth device is adjacent to the apparatus 1000 in the communication links.

In some embodiments, the second device(s) is adjacent to the apparatus 1000 in a communication links.

In some embodiments, the apparatus 1000 is a terminal device in the communication links that does not meet the first condition, the target device is a network device, and the second device(s) is an uplink next-hop terminal device for the apparatus 1000. The first information is used for requesting a paging message for the apparatus 1000, and/or system information required by the apparatus 1000. The first condition includes at least one of: being located within signal coverage of the network device, being a device closest to the network device in the communication link, and being able to acquire a paging message and/or system information from the network device directly.

In some embodiments, in a case where the first information is used to request a paging message for the device 1000, the first information includes information required for monitoring the paging message for the device 1000. In a case where the first information is used to request system information required by the apparatus 1000, the first information includes a type of the system information required by the apparatus 1000.

In some embodiments, the apparatus 1000 is a terminal device that does not meet the first condition in the communication links, the target device is a network device, and the second device(s) is an uplink next-hop terminal device for the apparatus 1000. The first information is used to request a paging message for the seventh device, and/or system information required by the seventh device. The seventh device in the communication links is an uplink previous-hop terminal device for the apparatus 1000, the source terminal device, or any one of devices, having RRC connection with the apparatus 1000, between the apparatus 1000 and the source terminal device. The first condition includes at least one of: being located within signal coverage of the network device, being a device closest to the network device in the communication links, and being able to acquire the paging messages and/or system information from the network device directly.

In some embodiments, in a case where the first information is used to request a paging message for a seventh device, the first information includes information required for monitoring a paging message for the seventh device. In a case where the first information is used to request system information required by the seventh device, the first information includes a type of the system information required by the seventh device.

In some embodiments, the apparatus 1000 further includes a second receiving unit for receiving the first information from the seventh device through the RRC connection before transmitting the first information to the second device(s) in the communication links through the RRC connection.

In some embodiments, the apparatus 1000 further includes a first processing unit for adding second information to the first information before transmitting the first information to the second device(s) in the communication links through the RRC connection. The second information is used for requesting a paging message for the apparatus 1000 and/or system information required by the apparatus 1000.

In some embodiments, in a case where the second information is used to request a paging message for the apparatus 1000, the second information comprises information required for monitoring the paging message for the apparatus 1000. In a case where the second information is used to request system information required by the apparatus 1000, the second information includes a type of the system information required by the apparatus 1000.

In some embodiments, the second device(s) is a terminal device in the communication link that meets the first condition.

In some embodiments, the target device is a network device. The second device(s) is a downlink next-hop terminal device for the apparatus 1000, or any one of terminal devices, having RRC connection with the first device, between the apparatus 1000 and the source terminal device. The first information includes a paging message for the eighth device and/or system information required by the eighth device. The eighth device is second device(s), the source terminal device, or any one terminal device between the second device(s) and the source terminal device.

In some embodiments, in a case where the apparatus 1000 meets the first condition, the first information is acquired by the apparatus 1000 from the network device. In a case where the apparatus 1000 does not meet the first condition, the first information is acquired by the apparatus 1000 from the ninth device in the communication links. The ninth device is a downlink previous-hop terminal device of the apparatus 1000, or any one of terminal devices, having RRC connection with the first device, between the apparatus 1000 and the network device. The first condition includes at least one of: being located within signal coverage of the network device, being a device closest to the network device in the communication links, and being able to acquire paging message and/or system information from the network device directly.

In some embodiments, the apparatus 1000 further comprises a third receiving unit for receiving fourth information from the eighth device through the second device(s) before transmitting the first information to the second device(s) in the communication links through the RRC connection. The fourth information is used for requesting a paging message for the eighth device and/or system information required by the eighth device. In a case where the fourth information is used to request a paging message for the eighth device, the fourth information includes information required for monitoring the paging message for the eighth device. In a case where the fourth information is used to request system information required by the eighth device, the fourth information includes a type of the system information required by the eighth device.

In some embodiments, in a case where the fourth information includes information required for monitoring a paging message for the eighth device, the first information includes the paging message for the eighth device. In a case where the fourth information includes the type of the system information required by the eighth device, the first information includes system information required by the eighth device.

In some embodiments, the first information is used to indicate a radio link state of the apparatus 1000 or to indicate that the apparatus 1000 undergoes a network connection state change or a radio link state change.

In some embodiments, the second device(s) is a next-hop terminal device for the apparatus 1000. The first information is used to indicate a radio link state of the tenth device, or to indicate that the tenth device undergoes a network connection state change or a radio link state change. Here, the tenth device is a previous-hop terminal device of the apparatus 1000, or a terminal device not adjacent to the apparatus 1000 in the communication links.

In some embodiments, the first information is acquired from the previous-hop terminal device for the apparatus 1000.

In some embodiments, the apparatus 1000 further includes a second processing unit for adding fifth information to the first information before transmitting the first information to the second device(s) in the communication links through the RRC connection. The fifth information is sued for indicating a radio link state of the apparatus 1000 or that the apparatus 1000 undergoes a network connection state change or a radio link state change.

In some embodiments, the fifth information includes at least one of the following: an identifier of the device 1000, an identification of a number of transmission hops associated with the radio link state of the apparatus 1000, and an identification of the number of transmission hops associated with the occurrence of a network connection state change or a radio link state change of the apparatus 1000.

In some embodiments, the radio link status includes a radio link failure. The network connection state change includes cell handover, cell reselection, or RRC connection state change. The radio link state change includes link quality degradation of the radio link.

In some embodiments, the first information is used to indicate at least one of: QoS between the apparatus 1000 and the second device(s), QoS can be allocated by the second device(s), and the number of transmission hops of the communication links.

In some embodiments, the apparatus 1000 further includes a determining unit for determining QoS between the apparatus 1000 and the second device(s) before transmitting the first information to the second device(s) in the communication links through the RRC connection.

In some embodiments, the second device(s) is a next-hop terminal device for the apparatus 1000. The first information is an RRC reconfiguration message between the apparatus 1000 and the second device(s), and the RRC reconfiguration message includes at least one of: SRAP configuration, RLC configuration, and MAC configuration.

In some embodiments, the first information is determined by the apparatus 1000. Alternatively, the first information is determined by the apparatus 1000 based on the RRC reconfiguration message with a previous-hop terminal device.

In some embodiments, the target device is a network device or a terminal device.

In some embodiments, the second device(s) is a target device, and the target device is a network device. The first information is used to indicate at least one of: the eleventh device undergoes radio link failure, channel quality between the eleventh device and the at least one twelfth device, an identifier of the eleventh device, and the number of transmission hops between the eleventh device and the network device. The eleventh device is a terminal device that does not have RRC connection with the network device in the communication links.

In some embodiments, the apparatus 1000 further includes a third transmitting unit for transmitting sixth information to the thirteenth device in the communication links through the RRC connection, the sixth information being related to radio resource management. Here, the thirteenth device is not adjacent with the apparatus 1000 in the communication links.

In some embodiments, the communication links have at least one of the following characteristics: there is RRC connection between all adjacent devices in the communication links, there is RRC connection between a part or all of non-adjacent devices in the communication links, in a case where the target device is a network device, there is RRC connection between a part or all of the terminal devices in the communication links and the network device, in a case where the target device is a network device, there is an RRC connection between the terminal device closest to the network device in the communication links and all or part of other devices, there is RRC connection between a part or all of the devices in the communication links and a fourteenth device, the fourteenth device being any one of the following devices: the source terminal device, the target device, a device in the communication links that is closest to the source terminal device, a device in the communication links that is closest to the target device, and a device determined based on a preset rule.

In some embodiments, whether the apparatus 1000 establishes RRC connection with other devices is determined by the apparatus 1000 or the network device.

In some embodiments, the first information is identified by one or more of the following: a radio link control channel, a bearer identification, a logical channel.

Those skilled in the art should understand that the related description of the radio resource management apparatus according to the embodiments of the present application can be understood with reference to the related description of the radio resource management methods according to the embodiments of the present application.

FIG. 11 is a schematic structural diagram of a communication device 1100 according to an embodiment of the present application. The communication device 1100 shown in FIG. 11 includes a processor 1110, and the processor 1110 can call and run a computer program from a memory to implement the method in the embodiments of the present application.

Optionally, as shown in FIG. 11, the communication device 1100 may further include a memory 1120. The processor 1110 may call and run a computer program from the memory 1120 to implement the methods in the embodiments of the present application.

The memory 1120 may be a separate device independent from the processor 1110 or may be integrated in the processor 1110.

Optionally, as shown in FIG. 11, the communication device 1100 may further include a transceiver 1130, and the processor 1110 may control the transceiver 1130 to communicate with other devices. Specifically, the processor 1110 may control the transceiver 1130 to transmit information or data to other devices, or receive information or data transmitted by other devices.

Here, the transceiver 1130 may include a transmitter and a receiver. The transceiver 1130 may further include antennas, and the number of antennas may be one or more.

Specifically, the communication device 1100 may be the first device in the embodiments of the present application, and the communication device 1100 may implement corresponding processes implemented by the first device in each method of the embodiments of the present application, and will not be described herein for the sake of simplicity.

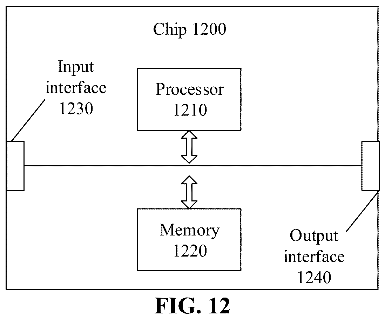

FIG. 12 is a schematic structural diagram of a chip according to an embodiment of the present application. The chip 1200 shown in FIG. 12 includes a processor 1210, and the processor 1210 can call and run a computer program from a memory to implement the methods in the embodiments of the present application.

Optionally, as shown in FIG. 12, the chip 1200 may further include a memory 1220. The processor 1210 may call and run a computer program from the memory 1220 to implement the methods in the embodiments of the present application.

Here, the memory 1220 may be a separate device independent of the processor 1210 or may be integrated in the processor 1210.

Optionally, the chip 1200 may further include an input interface 1230. The processor 1210 may control the input interface 1230 to communicate with other devices or chips. Specifically, the processor 1210 may control the input interface 1230 to acquire information or data transmitted by other devices or chips.

Optionally, the chip 1200 may further include an output interface 1240. The processor 1210 may control the output interface 1240 to communicate with other devices or chips. Specifically, the processor 1210 may control the output interface 1240 to output information or data to other devices or chips.

The chip can be applied to the first device in the embodiments of the present application, and the chip can implement the corresponding processes implemented by the first device in each method of the embodiments of the present application, and will not be repeated here for the sake of simplicity.

It should be understood that the chip mentioned in the embodiments of the present application may also be referred to as a system level chip, a system chip, a chip system, or system-on-chip.

It should be understood that the processor of the embodiment of the present application may be an integrated circuit chip having signal processing capabilities. In the implementation process, the steps of the above-described method embodiments may be completed by integrated logic circuits of hardware in the processor or instructions in the form of software. The processor described above may be a general-purpose processor, a Digital Signal Processor (DSP), an Application Specific Integrated Circuit (ASIC), an off-the-shelf Field Programmable Gate Array (FPGA) or other programmable logic device, a discrete gate or transistor logic device, or a discrete hardware component. The methods, steps, and logical block diagrams disclosed in the embodiments of the present application may be implemented or executed. The general purpose processor may be a microprocessor or the processor may be any conventional processor or the like. The steps of the method disclosed in connection with the embodiments of the present application may be directly embodied as execution by the hardware decoding processor, or may be executed by the combination of hardware and software modules in the decoding processor. The software module may be located in a storage medium mature in the art, such as random access memory, flash memory, read-only memory, programmable read-only memory, or electrically erasable and writable programmable memory, registers, etc. The storage medium is located in the memory, and the processor reads the information in the memory, and combines its hardware to complete the steps of the above method.

It is understood that the memory in the embodiments of the present application may be a volatile memory or a non-volatile memory, or may include both volatile and non-volatile memory. The non-volatile memory may be a Read-Only Memory (ROM), a Programmable ROM (PROM), an Erasable PROM (EPROM), an Electrically EPROM (EEPROM), or a flash memory. The volatile memory may be a Random Access Memory (RAM), which serves as an external cache. By way of example, but not limitation, many forms of RAM are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It should be noted that the memory of the systems and methods described herein is intended to include, but is not limited to, these and any other suitable type of memory.

It should be understood that the above memory is illustrative but not limiting, for example, the memory in embodiments of the present application may also be a static random access memory (SRAM), a dynamic random access memory (DRAM), a synchronous dynamic random access memory (SDRAM), a double data rate synchronous dynamic random access memory (DDR SDRAM), an enhanced SDRAM (ESDRAM), a synch link dynamic random access memory (SLDRAM), a Direct Rambus RAM (DR RAM), and the like. That is, the memory in the embodiments of the present application is intended to include, but is not limited to, these and any other suitable type of memory.

Embodiments of the present application also provide a computer-readable storage medium for storing a computer program. The computer-readable storage medium can be applied to the first device in the embodiments of the present application, and the computer program causes the computer to execute the corresponding process implemented by the first apparatus in each method of the embodiments of the present application, and will not be described herein for the sake of brevity.

Embodiments of the present application also provide a computer program product comprising computer program instructions. The computer program product can be applied to the first device in the embodiments of the present application, and the computer program instructions cause the computer to execute corresponding process implemented by the first device in each method of the embodiments of the present application, and will not be described herein for the sake of brevity.

Embodiments of the present application also provide a computer program. The computer program can be applied to the first device in the embodiments of the present application, and when the computer program is run on the computer, the computer executes the corresponding process implemented by the first device in each method of the embodiments of the present application, and will not be described herein for the sake of conciseness.

Those of ordinary skill in the art will appreciate that the elements and algorithmic steps of the various examples described in connection with the embodiments disclosed herein can be implemented in electronic hardware, or a combination of computer software and electronic hardware. Whether these functions are performed by hardware or software depends on the specific application and design constraints of the technical solution. Those skilled in the art may use different methods for implementing the described functions for each particular application, but such implementations should not be considered beyond the scope of the present application.

Those skilled in the art will clearly understand that for convenience and conciseness of the description, the specific working processes of the systems, devices and units described above may refer to the corresponding processes in the aforementioned method embodiments, and will not be repeatedly described here.

In several embodiments provided herein, it should be understood that the disclosed systems, apparatuses, and methods may be implemented in other ways. For example, the device embodiments described above are merely schematic, for example, the division of units is only a logical function division, and there may be other division methods in actual implementation, for example, multiple units or components may be combined or integrated into another system, or some features may be ignored or not implemented. In addition, the coupling or direct coupling or communication connection between each other shown or discussed may be an indirect coupling or communication connection through some interface, device or unit, which may be electrical, mechanical or otherwise.

The units described as separate units may or may not be physically separate, and the units displayed as units may or may not be physical units, that is, they may be located in one place or may be distributed over a plurality of network units. Some or all of the units may be selected according to actual needs to achieve the purpose of the solutions of the present embodiment.

In addition, each functional unit in each embodiment of the present application may be integrated in one processing unit, each unit may be physically present alone, or two or more units may be integrated in one unit.

The functions may be stored in a computer-readable storage medium if implemented in the form of software functional units and sold or used as a stand-alone product. Based on this understanding, the technical solution of the present application essentially, or the part that contributes to the prior art or the part of the technical solution, may be embodied in the form of a software product, and the software product may be stored in a storage medium and includes several instructions for causing a computer device (which may be a personal computer, a server, or a network device, etc.) to perform all or part of the steps of the methods described in various embodiments of the present application. The storage medium includes a USB disk, a removable hard disk, a Read-Only Memory (ROM), a Random Access Memory (RAM), a magnetic disk, or an optical disk that can store program codes.

The above are only specific embodiments of the present application, but the scope of protection of the present application is not limited thereto. Any Change or substitution that can be easily derived by a person skilled in the art, within the technical scope disclosed in the present application, should be covered within the scope of protection of the present application. Therefore, the scope of protection of the present application should be based on the scope of protection of the claims.

## Claims

1. A radio resource management method, applied to a first device, wherein communication links in which the first device is located include a source terminal device, a target device, and a plurality of relay terminal devices between the source terminal device and the target device, and the method comprises:
transmitting first information to second device(s) in the communication links through radio resource control (RRC) connection, the first information being related to radio resource management.

2. The method of claim 1, wherein the second device(s) is not adjacent with the first device in the communication links.

3. The method of claim 2, wherein the first device is a terminal device in the communication links that does not meet a first condition, the second device(s) is terminal device(s) in the communication links that meets the first condition, and the target device is a network device;
the first information is used for requesting a paging message for the first device and/or system information required by the first device;
the first condition comprises at least one of:
being located within signal coverage of the network device;
being a device in the communication links closest to the network device; and,
being able to acquire a paging message and/or system information from the network device directly.

4. The method of claim 3, wherein,
in a case where the first information is used for requesting the paging message for the first device, the first information comprises information required for monitoring the paging message for the first device;
in a case where the first information is used for requesting the system information required by the first device, the first information comprises a type of the system information required by the first device.

5. The method of claim 2, wherein the first device is a terminal device in the communication links that meets a first condition, the second device(s) is terminal device(s) in the communication links that does not meet the first condition, and the target device is a network device;
the first information comprises paging message(s) for the second device(s) and/or system information required by the second device(s);
the first condition comprises at least one of:
being located within signal coverage of the network device;
being a device in the communication links closest to the network device; and,
being able to acquire a paging message and/or system information from the network device directly.

6. The method of claim 5, wherein before transmitting the first information to the second device(s) in the communication links through the RRC connection, the method further comprises:
receiving second information from the second device(s), wherein the second information is used for requesting paging message(s) for the second device(s) and/or system information required by the second device(s);
in a case where the second information is used for requesting the paging message(s) for the second device(s), the second information comprises information required for monitoring the paging message(s) for the second device(s);
in a case where the second information is used for requesting system information required by the second device(s), the second information comprises a type of the system information required by the second device(s).

7. The method of claim 6, wherein,
in a case where the second information comprises the information required for monitoring the paging message(s) for the second device(s), the first information includes the paging message(s) for the second device(s);
in a case where the second information comprises a type of the system information required by the second device(s), the first information includes the system information required by the second device(s).

8. The method of claim 6 or 7, wherein before transmitting the first information to the second device(s) in the communication links through the RRC connection, the method further comprises:
acquiring, based on the information required for monitoring the paging message(s) for the second device(s), the paging message(s) for the second device(s) from the network device; and/or,
acquiring, based on the type of the system information required by the second device(s), the system information required by the second device(s) from the network device.

9. The method of claim 2, wherein,
the first device and the second device(s) are different terminal devices in the communication links,
the first information is used to indicate a radio link state of the first device, or indicate that the first device undergoes a network connection state change or a radio link state change.

10. The method of claim 2, wherein,
the first device and the second device(s) are different terminal devices in the communication links;
the first information is used for instructing the second device(s) to measure channel busy ratio (CBR) and/or link quality between the second device(s) and at least one third device.

11. The method of claim 10, wherein
the link quality includes a reference signal received power.

12. The method of claim 2, wherein,
the first device and the second device(s) are different terminal devices in the communication links;
the first information is used to indicate quality of service (QoS) between the second device(s) and a fourth device; wherein the second device(s) is adjacent to the fourth device in the communication links.

13. The method of claim 2, wherein,
the first device and the second device(s) are different terminal devices in the communication links;
the first information is used for configuring transmission resource(s) of the second device(s).

14. The method of claim 13, wherein,
the transmission resource(s) of the second device(s) is selected by the first device from a resource pool or is allocated by the target device, wherein the target device is a network device.

15. The method of any one of claims 12 to 14, wherein,
the first device is any one of following devices:
the source terminal device;
the target device;
a device in the communication links that is closest to the source terminal device;
a device in the communication links that is closest to the target device;
a device determined based on a preset rule.

16. The method of claim 2, wherein,
the first device and the second device(s) are different terminal devices in the communication links;
the first information is an RRC reconfiguration message, and the RRC reconfiguration message comprises at least one of:
sidelink Relay Adaptation Protocol (SRAP) configuration, radio link control (RLC) configuration, and media access control (MAC) configuration,
wherein the SRAP configuration comprises identifier(s) assigned to the second device(s) and/or identifiers of other terminal devices in the communication links.

17. The method of any one of claims 2 to 16, wherein,
the first device and the second device(s) are different terminal devices in the communication links;
in a case where a second condition is satisfied, a radio link failure occurs between the first device and the second device(s), wherein the second condition comprises:
a radio link failure occurs between any two adjacent devices between the first device and the second device(s); or
a radio link failure occurs between any two adjacent devices in the communication link.

18. The method of any one of claims 2 to 17, wherein,
the first device and the second device(s) are different terminal devices in the communication links, and there is RRC connection between the first device and the second device(s);
in a case where a third condition is satisfied, the RRC connection between the first device and the second device(s) is released, wherein the third condition comprises:
RRC connection between any two adjacent devices between the first device and the second device(s) is released; or
RRC connection between any two adjacent devices in the communication links is released.

19. The method of claims 9 to 18, wherein,
the target device is a network device or a terminal device.

20. The method of any one of claims 2 to 19, wherein,
a number of the second device (s) is one or more.

21. The method of claim 2, wherein,
the second device(s) is the target device, and the target device is a network device;
the first information is used to indicate at least one of:
the first device undergoes a radio link failure;
channel quality between the first device and at least one fifth device; and,
identifiers of all terminal devices in the communication links.

22. The method of claim 2 or 21, wherein,
the second device(s) is the target device, and the target device is a network device;
transmission resource(s) of the first device is configured for the first device by the network device through RRC connection.

23. The method of any one of claims 2 to 22, wherein the method further comprises:
transmitting third information to a sixth device in the communication links through RRC connection, the third information being related to radio resource management; wherein the sixth device is adjacent to the first device in the communication links.

24. The method of claim 1, wherein the second device(s) is adjacent to the first device in the communication links.

25. The method of claim 24, wherein the first device is a terminal device in the communication links that does not meet a first condition, the target device is a network device, and the second device(s) is an uplink next-hop terminal device for the first device;
the first information is used for requesting a paging message for the first device, and/or system information required by the first device;
the first condition comprises at least one of:
being located within signal coverage of the network device;
being a device in the communication link closest to the network device; and,
being able to acquire a paging messages and/or system information from the network device directly.

26. The method of claim 25, wherein
in a case where the first information is used for requesting the paging message for the first device, the first information comprises information required for monitoring the paging message for the first device;
in a case where the first information is used for requesting system information required by the first device, the first information comprises a type of the system information required by the first device.

27. The method of claim 24, wherein the first device is a terminal device in the communication links that does not meet a first condition, the target device is a network device, and the second device(s) is an uplink next-hop terminal device for the first device;
the first information is used for requesting a paging message for a seventh device, and/or system information required by the seventh device, wherein the seventh device in the communication links is an uplink previous-hop terminal device for the first device, the source terminal device, or any one of devices, having RRC connection with the first device, between the first device and the source terminal device;
the first condition comprises at least one of:
being located within signal coverage of the network device;
being a device in the communication links closest to the network device; and,
being able to acquire a paging message and/or system information from the network device directly.

28. The method of claim 27, wherein
in a case where the first information is used for requesting a paging message for the seventh device, the first information comprises information required for monitoring the paging message for the seventh device;
in a case where the first information is used for requesting system information required by the seventh device, the first information comprises a type of system information required by the seventh device.

29. The method of claim 27 or 28, wherein before the transmitting the first information to the second device(s) in the communication links through the RRC connection, the method further comprises:
receiving the first information from the seventh device through RRC connection.

30. The method of any one of claims 27 to 29, wherein before the transmitting the first information to the second device(s) in the communication link through the RRC connection, the method further comprises:
adding second information to the first information, the second information being used for requesting a paging message for the first device and/or system information required by the first device.

31. The method of claim 30, wherein
in a case where the second information is used for requesting the paging message for the first device, the second information comprises information required for monitoring the paging message for the first device;
in a case where the second information is used for requesting the system information required by the first device, the second information comprises a type of the system information required by the first device.

32. The method of any one of claims 25 to 31, wherein,
the second device(s) is a terminal device in the communication links that meets the first condition.

33. The method of claim 24, wherein the target device is a network device, the second device(s) is a downlink next-hop terminal device for the first device, or any one of terminal devices, having RRC connection with the first device, between the first device and the source terminal device;
the first information comprises a paging message for an eighth device and/or system information required by the eighth device, wherein the eighth device is the second device(s), the source terminal device, or any one terminal device between the second device(s) and the source terminal device.

34. The method of claim 33, wherein,
in a case where the first device meets a first condition, the first information is acquired by the first device from the network device;
in a case where the first device does not meet the first condition, the first information is acquired by the first device from a ninth device in the communication links, wherein the ninth device is a downlink previous-hop terminal device for the first device, or any one of terminal devices, having RRC connection with the first device, between the first device and the network device,
wherein the first condition comprises at least one of:
being located within signal coverage of the network device;
being a device in the communication links closest to the network device; and,
being able to acquire a paging message and/or system information from the network device directly.

35. The method of claim 33 or 34, wherein before transmitting the first information to the second device(s) in the communication links through the RRC connection, the method further comprises:
receiving fourth information from the eighth device through the second device(s), wherein the fourth information is used for requesting a paging message for the eighth device, and/or system information required by the eighth device;
in a case where the fourth information is used for requesting a paging message for the eighth device, the fourth information comprises information required for monitoring the paging message for the eighth device;
in a case where the fourth information is used for requesting system information required by the eighth device, the fourth information comprises a type of the system information required by the eighth device.

36. The method of claim 35, wherein,
in a case where the fourth information comprises the information required for monitoring the paging message for the eighth device, the first information comprises the paging message for the eighth device;
in a case where the fourth information includes the type of the system information required by the eighth device, the first information comprises the system information required by the eighth device.

37. The method of claim 24, wherein
the first information is used for indicating a radio link state of the first device, or to indicate that first device undergoes a network connection state change or a radio link state change.

38. The method of claim 24, wherein,
the second device(s) is a next-hop terminal device for the first device;
the first information is used to indicate a radio link state of a tenth device, or to indicate that the tenth device undergoes a network connection state change or a radio link state change, wherein the tenth device is a previous-hop terminal device for the first device, or a terminal device not adjacent to the first device in the communication links.

39. The method of claim 38, wherein
the first information is acquired from the previous-hop terminal device for the first device.

40. The method of claim 38 or 39, wherein before transmitting the first information to the second device(s) in the communication links through the RRC connection, the method further comprises:
adding fifth information to the first information, wherein the fifth information is used for indicating a radio link state of the first device or that the first device undergoes a network connection state change or a radio link state change.

41. The method of claim 40, wherein,
the fifth information comprises at least one of:
an identifier of the first device;
an identification of a number of transmission hops associated with the radio link state of the first device; and,
an identification of a number of transmission hops associated with an occurrence of a network connection state change or a radio link state change of the first device.

42. The method of any one of claims 9, 37 to 41, wherein,
the radio link state comprises a radio link failure;
the network connection state change comprises cell handover, cell reselection, or RRC connection state change;
the radio link state change comprises link quality degradation of radio link.

43. The method of claim 24, wherein
the first information is used to indicate at least one of:
QoS between the first device and the second device(s);
QoS can be allocated by the second device(s); and,
a number of transmission hops of the communication links.

44. The method of claim 43, wherein before transmitting the first information to the second device(s) in the communication link through the RRC connection, the method further comprises:
determining QoS between the first device and the second device(s).

45. The method of claim 24, wherein,
the second device(s) is a next-hop terminal device for the first device;
the first information is an RRC reconfiguration message between the first device and the second device(s), and the RRC reconfiguration message comprises at least one of: SRAP configuration, RLC configuration, and MAC configuration.

46. The method of claim 45, wherein,
the first information is determined by the first device; or,
the first information is determined by the first device based on an RRC reconfiguration message with a previous-hop terminal device.

47. The method of any one of claims 37 to 46, wherein,
the target device is a network device or a terminal device.

48. The method of claim 24, wherein,
the second device(s) is the target device, and the target device is a network device;
the first information is used to indicate at least one of:
an eleventh device undergoes a radio link failure;
channel quality between the eleventh device and the at least one twelfth device;
an identifier of the eleventh device; and,
a number of transmission hops between the eleventh device and the network device;
wherein the eleventh device is a terminal device that does not have RRC connection with the network device in the communication links.

49. The method of any one of claims 24 to 48, wherein the method further comprises:
transmitting sixth information to a thirteenth device in the communication links through RRC connection, the sixth information relating to radio resource management; wherein the thirteenth device is not adjacent with the first device in the communication links.

50. The method of any one of claims 1 to 49, wherein the communication links have at least one of following characteristics:
there is RRC connection between all adjacent devices in the communication links;
there is RRC connection between a part or all of non-adjacent devices in the communication links;
in a case where the target device is a network device, there is RRC connection between a part or all of the terminal devices in the communication links and the network device;
in a case where the target device is a network device, there is RRC connection between a terminal device closest to the network device in the communication links and all or part of other devices;
there is RRC connection between a part or all of devices in the communication links and a fourteenth device, the fourteenth device being any one of following devices:
the source terminal device, the target device, a device in the communication links that is closest to the source terminal device, a device in the communication links that is closest to the target device, and a device determined based on a preset rule.

51. The method of any one of claims 1 to 50, wherein,
whether the first device establishes RRC connection with other devices is determined by the first device or the network device.

52. The method of any one of claims 1 to 51, wherein,
the first information is identified by one or more of following:
a radio link control channel, a bearer identification, a logical channel.

53. A radio resource management apparatus, wherein communication links in which the apparatus is located comprises a source terminal device, a target device, and a plurality of relay terminal devices between the source terminal device and the target device, and the apparatus comprises:
a first transmitting unit, configured to transmit first information related to radio resource management to second device(s) in the communication links through radio resource control (RRC) connection.

54. A terminal comprising a processor and a memory, wherein the memory is configured for storing a computer program, and the processor is configured for invoking and running the computer program stored in the memory to perform the method of any one of claims 1 to 52.

55. A chip comprising a processor for invoking and running a computer program from a memory to cause a device on which the chip is mounted to perform the method of any one of claims 1 to 52.

56. A computer-readable storage medium for storing a computer program that causes a computer to perform the method of any one of claims 1 to 52.

57. A computer program product comprising computer program instructions that cause a computer to perform the method of any one of claims 1 to 52.

58. A computer program that causes a computer to perform the method of any one of claims 1 to 52.
